# EUROPEAN PATENT APPLICATION

(11) **EP 1 615 417 A1**
(43) Date of publication of application: **11.01.2006**
(21) Application number: 05014903.8
(22) Date of filing: 08.07.2005
(51) Int. Cl.: H04N 1/00, H04N 1/44, H04N 1/32

(54) **Image forming apparatus and image scanner**

(30) Priority: 08.07.2004 JP 2004202312; 08.07.2004 JP 2004202313; 08.07.2004 JP 2004202314
(71) Applicant: SHARP KABUSHIKI KAISHA, Osaka-shi, Osaka 545-8522 (JP)
(72) Inventor: Okamoto, Yuji, Souraku-gun Kyoto 619-0232 (JP); Fujiwara, Katsuyoshi, Sennan-gun Osaka 590-0445 (JP); Ueda, Naofumi, Souraku-gun Kyoto 619-0225 (JP); Yoshiura, Syouichirou, Ikoma-gun Nara 639-1061 (JP)
(74) Representative: Müller - Hoffmann & Partner

(57) **Abstract**

An image forming apparatus receiving image data and forming an image on a sheet based on the image.data received, comprising a memory means for storing image data related to a fixed image and a judgment means for judging the presence or absence of the confidentiality of the received image data, and an image based on the image data and the fixed image are formed on one side and another side of a sheet respectively when it is judged that the image data have confidentiality.

## Description

### BACKGROUND OF THE INVENTION

### 1. Field of the Invention

The present invention relates to an image forming apparatus for adding an image including information limiting a copy when a confidential document is outputted, and an image scanner capable of performing copy limitation at reading a manuscript to which the fore-mentioned image was added.

### 2. Description of the Related Art

There have been commercially available many appratuses having a function (hereinafter, referred to as a watermark function) copying a specified letter string and a mark in each of pages printed or an arbitrary page, as the function of a printer driver which controls image forming apparatuses such as a printer and a cmposite machine from an information processor such as a personal computer. The watermark function is used for promoting awareness of the handling of documents printed, by copying character patterns such as "confidential", "important", "circular", "urgent" and "a copy is strictly prohibited" in documents which a user prints (for example, refer to Japanese Patent Application Laid-Open No.2002-77600 (hereinafter, abbreviated as JP-A-2002-77600)).

Thus, although it is possible to promote awareness of the handling of documents for a user by adding the watermark in a document outputted, it has a problem that there is a fear of leaking information because there is a case that a copy is prepared by unawareness of a user or a case that a copy is illegally prepared by a malicious third party.

Accordingly, there have been conventionally proposed copy machines terminating copy motion by adding a specific image such as a bar code in a manuscript and judging it as a confidential document when the fore-mentioned bar code is optically detected at copying the manuscript (for example, refer to JP-A-54-32322, JP-A-63-163866, JP-A-4-227365, JP-A-5-12422 and JP-A-6-20027). Similarly, there is proposed a copy machine terminating copy motion by adding a specific pattern in a manuscript and judging it as a confidential document when the fore-mentioned pattern is optically detected at copying the manuscript (for example, refer to JP-A-7-38747). Further, there are proposed copy machines terminating copy motion by forming a portion or a whole of an image using an ink having a predetermined optical property such as infrared rays reflection, infrared rays absorption or ultraviolet rays absorption, or an ink having a predetermined magnetic property in a manuscript and detecting the fore-mentioned inks using an optical procedure or a magnetic procedure during scanning the manuscript (for example, refer to JP-A-58-224362, JP-A-59-9681, JP-A-60-8880, JP-A-60-8878 and JP-A-56-126844).

However, when a apparatus has a constitution that a bar code and a specific pattern are added on the frontside of a manuscript in order to indicate a confidential document as described above, nonsensical information is added to the image of the manuscript; therefore a desired image is not always obtained by a user and the user feels occasionally unsatisfaction. Further, there is a problem that they cannot be occasionally added depending on the content of a document prepared.

Further, since such a apparatus is a constitution that a bar code and a specific pattern are added on the frontside of a manuscript, possibility is enhanced that meaning included in the bar code and specific pattern comes to be acquainted by a third party and there is a problem that a function restricting copy can be prevented by erasing the bar code and specific pattern using correction fluid or the like. Consequently, the copying of a manuscript is occasionally carried out illegally and there is a problem that information is possibly leaked even if an image was added on the frontside of a manuscript for restricting a copy.

Further, when an ink having an optical or magnetic property is used, a separate detection procedure different from the scanning procedure of a manuscript is required and there is a problem that the cost of the whole apparatus is pushed up. Since a specific ink is used, there are a problem from the viewpoint of management of the apparatus that the ink is not easily available and a problem that the maintenance cost of the ink is increased.

Further, when a apparatus is a constitution that copy motion is terminated when a specific pattern such as a bar code and an ink having a fixed property are detected, even a person having proper authority such as a preparer of a confidential document cannot copy the confidential document; therefore when the copy of the confidential document is required, the output of an image by a printer is required to be carried out again and there is a problem that the handling of a confidential document is very troublesome.

### BRIEF SUMMARY OF THE INVENTION

The present invention was carried out considering such circumstances, and the purpose of the present invention is to provide an image forming apparatus which can prepare a printed article to which information of copy limitation and the like are added, without changing the image of a manuscript, at low cost, by making a constitution wherein when it is judged that received image data have the confidentiality, an image based on the fore-mentioned image data is formed on the frontside of a sheet and a fixed image preliminarily prepared is formed on the backside of the sheet.

The other purpose of the present invention is to provide an image scanner which scans an image from the frontside and backside of a sheet and can limit the performance of processing based on the image data scanned from the frontside of the sheet when it is detected that a fixed image is formed at the backside of the sheet.

The other purpose of the present invention is to provide an image scanner which can approve the performance of processing based on the image data scanned from the frontside of the sheet when the indication of performance by a person having proper authority is received, even if a fixed image is detected from the backside of the sheet.

The image forming apparatus related to the present invention is an image forming apparatus receiving image data and forming an image on a sheet based on the received image data, equipped with a memory means for storing image data related to a fixed image, a judgment means for judging the presence or absence of the confidentiality of the received image data, and a means for forming an image based on the image data and the fixed image, on one side and another side of a sheet respectively when it is judged that the fore-mentioned image data have confidentiality.

In the present invention, when it is judged that the image data received have confidentiality, an image based on the image data is designed to be formed on the frontside (one side) of a sheet and an image based on the predetermined image data is designed to be formed on the backside (another side) of the sheet; therefore the image including specific information is provided for the backside of the sheet, and control of performing copy limitation by the image can be carried out. Further, since it is added on the backside of a sheet, it is not required to change the image which a user himself has prepared, and a chance for obtaining the technical meaning of the added image by a third party is decreased to enhance effect for preventing information leak.

The image forming apparatus related to the present invention is an image forming apparatus equipped with a detection means for detecting an image included in the received image data, wherein the judgment means judges the presence or absence of the confidentiality of the image data based on the image detected by the detection means.

In the present invention, when the fixed image is included in the received image data, it is judged that a printed article has confidentiality, and the fixed image is designed to be added on the backside of a sheet; therefore when marks such as confidential, internal use only and a copy is strictly prohibited and a letter string are detected, for example, an image for performing copy limitation is automatically added on the backside of a sheet. Accordingly, the improvement of confidentiality can be attained even if a user himself does not set confidential processing utilizing a printer driver and the like.

The image forming apparatus related to the present invention is an image forming apparatus equipped with a means for receiving identification information identifying a user at reception of the image data and a certification means for certifying the user based on the received identification information, wherein the judgment means judges the presence or absence of the confidentiality of the image data based on the certification result according to the certification means.

In the present invention, identification information identifying a user is received at reception of the image data, the certification of the user is carried out based on the received identification information, and the presence or absence of the confidentiality of a printed article is designed to be judged based on the certification result. Consequently, the image data received from a user who treats a confidential document can set so that an image for performing copy limitation is added on the backside of a sheet, and the improvement of confidentiality can be attained even if a user himself does not set confidential processing utilizing a printer driver and the like.

The image forming apparatus related to the present invention is an image forming apparatus wherein when an image is formed on one side of each of a plural number of sheets based on the received image data, the fixed image is formed on another side of the fixed number of a sheet when the judgment means judges that the simage data has confidentiality.

In the present invention, when an image is formed on one side of each of a plural number of sheets, the fixed image is designed to be formed on another side of the fixed number of a sheet when the image data received has confidentiality; therefore the fixed image is added on the backside of either of a plural number of sheets.

The image forming apparatus related to the present invention is an image forming apparatus wherein the fixed image includes information that the copy of the image formed on one side of the sheet is prohibited.

In the present invention, since the image added on the backside of a sheet includes information that the copy of the image formed on the frontside of the sheet is prohibited, a control prohibiting copy can be carried out when the information added on the backside of the sheet is detected at scanning a printed article prepared; therefore the printed article enhancing effect for preventing information leak is prepared.

The image forming apparatus related to the present invention is an image forming apparatus wherein the fixed image includes information related to the advisability of the copy of the image formed on one side of the sheet.

In the present invention, since the image added on the backside of a sheet includes information related to the advisability of the copy of the image formed on the frontside of a sheet, a control limiting copy can be carried out when the information added on the backside of the sheet is detected at scanning a printed article prepared, or when the fore-mentioned information is not detected; therefore the printed article enhancing effect for preventing information leak is prepared.

The image forming apparatus related to the present invention is an image forming apparatus wherein the fixed image includes information requiring the certification of a user.

In the present invention, since the image added on the backside of a sheet includes information requiring the certification of a user, a control limiting the use of a third party out of registration can be carried out; therefore the printed article enhancing effect for preventing information leak is prepared.

The image scanner related to the present invention is an image scanner for scanning an image from a manuscript, equipped with a scan means for obtaining image data by scanning an image formed on one side of a manuscript, a detection means for detecting a fixed image formed on another side of the manuscript; and a judgment means for judging whether the performance of processing based on the image data which the scan means obtained is approved or not based on the fixed image which said detection means detects.

In the present invention, when the image scanner for scanning an image formed on one side of a manuscript and obtaining image data detects the image data which was formed on another side of the manuscript, it judges whether the performance of processing based on the obtained image data is approved or not based on the fixed image detected. Consequently, for example, the performance of processing based on the image data which are obtained from the frontside of the manuscript can be limited based on the fixed image formed on the backside of the manuscript. Further, it can be prevented to deteriorate the image quality of the image data scanned from the frontside of the manuscript.

The image scanner related to the present invention is characterized in being constituted so that the image formed on one side of each of a plural number of manuscripts is continuously scanned.

In the present invention, the image scanner for continuously scanning an image formed on one side of each of a plural number of manuscripts and obtaining image data judges whether the performance of processing based on the image data scanned is approved or not based on whether the fixed image is detected from another side of a plural number of manuscripts or not. Consequently, for example, the performance of processing based on the image data which are obtained from the frontside of each of a plural number of the manuscripts can be limited based on whether the fixed image is formed or not, for example, on the backside of the manuscript. Further, it can be prevented to deteriorate the image quality of the image data scanned from the frontside of the manuscript, because the manuscript in which the fixed image was formed on the backside is scanned.

The image scanner related to the present invention is characterized in that the detection means detects the fixed image from another side of a fixed number of manuscript among the plural number of manuscripts.

In the present invention, it is judged whether the performance of processing based on the image data which are scanned from a plural number of the manuscripts is approved or not, based on whether the fixed image was detected or not from another side of a fixed number of manuscript among a plural number of manuscripts. Consequently, the performance of processing based on the image data which were scanned from the frontside of each of the manuscripts can be limited based on whether the fixed image is formed or not, for example, on the backside of a fixed number of the manuscript.

The image scanner related to the present invention is characterized in that the detection means detects the fixed image from another side of each of the plural number of manuscripts.

In the present invention, the processing based on the manuscripts can be limited based on whether a plural number of the fixed images were detected or not from another side of the manuscript.

The image scanner related to the present invention is characterized in that the judgment means is designed to judge that the performance of processing based on the image data obtained by the scan means is approved when the detection means detected the fixed image.

In the present invention, the performance of processing based on the image data scanned from one side of the manuscript is judged as approved when the fixed image is detected from another side of the manuscript. Accordingly, since the fixed image is not formed on another side of the manuscript which has confidentiality, it is possible to prohibit the processing based on the manuscript.

The image scanner related to the present invention is characterized in that when the detection means detects the fixed image from the even number of manuscripts, the judgment means judges that the performance of processing based on the image data scanned from one side of each of the manuscripts from the odd number of manuscript among manuscripts in which the fixed image is detected, to a manuscript in which the fixed image is detected, is approved.

In the present invention, since the fixed image is detected from another side of the even number of the manuscripts, it is judged that there is approved the performance of processing based on the image data scanned from one side of each of the manuscripts from the odd number of manuscript among manuscripts in which the fixed image was detected, to a manuscript in which the fixed image was detected. Accordingly, when the performance of processing based on the image data scanned from a plural number of the continuous manuscripts is approved, it is enough to form the fixed image on the first manuscript and the last manuscript among continuous manuscripts.

The image scanner related to the present invention is equipped with a certification means for carrying out certification when the detection means detects the fixed image, wherein the judgment means judges that when it is certified as legal by the certification means, there is approved the performance of processing based on the image data obtained by the scan means.

In the present invention, certification is carried out when the fore-mentioned fixed image is detected from the another side of a manuscript, and when it is certified as legal, it is judged that the performance of processing based on the image data which was scanned from the one side of a manuscript was approved. Accordingly, the processing based on said manuscript can be limited by forming the fixed image on another side of a manuscript having confidentiality.

The image scanner related to the present invention is equipped with the certification means for carrying out certification when the detection means detects a fixed image from either of manuscripts, wherein the judgment means judges that there is approved the performance of processing based on the image data obtained by the scan means one side of the manuscript in which the fixed image is not detected, and judges that there is approved the performance of processing based on the image data obtained by the scan means from one side of the manuscript in which the fixed image is detected, when it is certified as legal by the certification means.

In the present invention, since the fixed image is detected from another side of each of a plural number of manuscripts, it is judged that there is approved the performance of processing based on the image data scanned from one side of the manuscript in which the fixed image is not detected. On the other hand, certification is carried out when the fixed image is detected from either of manuscripts and it is certified as legal, it is judged that there is approved the performance of processing based on the image data scanned from one side of the manuscript in which the fixed image is detected. Accordingly, in the bundle of manuscripts comprising a plural number of manuscripts, the processing based on the image data scanned from one side of the manuscript in which the fixed image is formed can be limited.

The image scanner related to the present invention is equipped with the certification means for carrying out certification when the detection means detects a fixed image from a plural number of manuscripts, wherein the judgment means judges that when the detection means detects a fixed image from even number of manuscripts, there is approved the performance of processing based on the image data which the scan means obtained from one side of each of the manuscripts which do not exist from the odd number of manuscript among manuscripts in which the fixed image is detected, to a manuscript in which the fixed image is then detected, and judges that there is approved the performance of processing based on the image data which the scan means obtained from one side of each of the manuscripts from the odd number of manuscript to a manuscript in which the fixed image is detected, when it is certified as legal by the certification means.

In the present invention, the fixed image is detected from another side of each of a plural number of manuscripts and when the fixed image is detected from the even number of manuscripts, it is judged that there is approved the performance of processing based on the image data which the scan means obtained from one side of each of the manuscripts which do not exist from the odd number of manuscript among manuscripts in which the fixed image is detected, to a manuscript in which the fixed image is then detected. On the other hand, when certification is carried out when the fixed image is detected from the even number of manuscripts and it is certified as legal, it is judged that there is approved the performance of processing based on the image data scanned from one side of each of the manuscripts from the odd number of manuscript to a manuscript in which the fixed image is then detected. Accordingly, when the performance of processing based on the image data scanned from a plural number of the continuous manuscripts is limited, it is enough to form the fixed image on the first manuscript and the last manuscript among continuous manuscripts.

The image scanner related to the present invention is characterized in being equipped with a means for interrupting the scanning of an image by the scan means when the detection means detects the fixed image, and a means for resuming by the scan means the scanning of an image interrupted, when it is certified as legal by the certification means.

In the present invention, for example, when the fixed image formed on the backside of a manuscript is detected, the scanning of the manuscript is interrupted, and the scanning of an image is resumed when the result of certification is legal. Accordingly, it is possible to reduce processing load in the scanning processing of a manuscript which becomes in vain when the result of certification is not legal.

The image scanner related to the present invention is characterized in being equipped with a means for informing that the processing cannot be performed when the judgment means judges that there is not approved the performance of processing based on the image data which the scan means obtained.

In the present invention, when it is judged that the performance of processing based on the image data scanned from one side of the manuscript is not approved, it is possible to inform that copy is prohibited to a user going to copy the manuscript because he has no legal authority, by informing that the processing cannot be carried out.

The image scanner related to the present invention is characterized in being equipped with a memory means for storing the image data which the scan means obtained, and a means for deleting the image data stored in the memory means when the judgment means judges that there is not approved the performance of processing based on the image data which the scan means stored.

The present invention is equipped with a memory means for temporarily storing the image data obtained by scanning the manuscript, and the image data stored in the memory means is deleted when it is judged that the performance of processing based on the image data scanned is not approved. Accordingly, when the processing indicated by a user cannot be performed, the image data scanned from the manuscript hitherto are not stored in the apparatus itself.

The image scanner related to the present invention is equipped with another side scan means for scanning an image which is formed on another side of the manuscript, wherein the detection means detects a fixed image from the image which the another side scan means scans.

In the present invention, since a scan means for scanning an image which is formed on one side of the manuscript and an another side scan means for scanning an image which is formed on another side of the manuscript are separately formed, images respectively formed on the frontside and backside of the manuscript can be simultaneously scanned.

The image scanner related to the present invention is characterized in that the scan means is constituted so as to scan an image which is formed on another side of the manuscript, and the detection means detects a fixed image from the image which is formed on another side of the manuscript which the scan means scans.

In the present invention, since the scan means scanning an image formed on one side of the manuscript scans an image which is formed on another side of the manuscript, the images respectively formed on the frontside and backside of the manuscript can be scanned by the same scan means.

The image scanner related to the present invention is characterized in that the fixed image is an image not affecting image data which the scan means scans from one side of the manuscript.

In the present invention, for example, since the fixed image formed on the backside of the manuscript is an image not affecting the image data scanned on the frontside of the manuscript, a printed article preventing the deterioration of image quality can be prepared when the image formed on the frontside of the manuscript is copied.

According to the present invention, when it is judged that the image data received have confidentiality, image formation based on the fore-mentioned image data is carried out on the frontside of a sheet, and image formation based on the image data predetermined is designed to be carried out on the backside of a sheet. Accordingly, an image including specific information is imparted on the backside of a sheet, and copy limitation can be carried out by the image. Further, since it is added on the backside of a sheet, variation is not required for the image which a user himself prepared. Further, a chance that a third party knows the performance of copy limitation by the added image is decreased to enhance effect for preventing information leak.

According to the present invention, when the fixed image is included in the image data received, it is judged that a printed article outputted has confidentiality, and the fixed image is designed to be added on the backside of a sheet; therefore when marks such as confidential, internal use only and a copy is strictly prohibited and a letter string are detected, an image for performing copy limitation is automatically added on the backside of a sheet. Accordingly, the improvement of confidentiality can be attained even if a user himself does not set confidential processing utilizing a printer driver and the like.

According to the present invention, identification information identifying a user is received at reception of the image data, the certification of the user is carried out based on the identification information received, and the presence or absence of the confidentiality of a printed article outputted is designed to be judged based on the certification result. Consequently, the image data received from a user who treats a confidential document can set so that an image for performing copy limitation is added on the backside of a sheet, and the improvement of confidentiality can be attained even if a user himself does not set confidential processing utilizing a printer driver and the like.

According to the present invention, when an image is formed on one side of each of a plural number of sheets, the fixed image is designed to be formed on another side of the fixed number of a sheet when the image data received has confidentiality; therefore the fixed image is added on the backside of either of a plural number of sheets, and copy limitation can be carried out by the fixed image added.

According to the present invention, the image added on the backside of a sheet includes information that the copy of the image formed on the frontside of the sheet is prohibited. Consequently, a control prohibiting copy can be carried out when the information added on the backside of the sheet is detected at scanning a printed article prepared; therefore information leak by incorrect copy can be prevented.

According to the present invention, the image added on the backside of a sheet includes information related to the advisability of the copy of the image formed on the frontside of a sheet. Consequently, a control limiting copy can be carried out when the information added on the backside of the sheet is detected at scanning a printed article prepared, or when the information is not detected; therefore information leak by incorrect copy can be prevented.

According to the present invention, the image added on the backside of a sheet includes information requiring the certification of a user. Consequently, the certification of a user can be carried out when the fore-mentioned image is detected at scanning a printed article prepared, and information leak can be prevented by carrying out a control limiting the use of a third party out of registration.

According to the present invention, the image scanner for scanning an image formed on one side of a manuscript and gobbling down image data can limit the performance of processing based on the image data scanned, based on the image data detected from the backside of the manuscript. Further, since the fore-mentioned fixed image scans the manuscript which was formed on the backside, unnecessary information is not included in the image data scanned and it can be prevented to deteriorate image quality.

According to the present invention, the image scanner for continuously scanning an image formed, for example, on the frontside of each of a plural number of manuscripts and gobbling down the image data can limit the performance of processing based on the image data scanned from the frontside. Further, the performance of processing based on the image data which are scanned from the frontside of each of the manuscripts can be limited based on whether the fixed image is detected or not, for example, from the backside of a fixed number of manuscript among a plural number of the manuscripts. Further, since the manuscript in which the fixed image was formed on the backside is scanned, unnecessary information is not included in the image data scanned and it can be prevented to deteriorate image quality.

According to the present invention, when the fixed image was detected, it can be judged that the performance of processing based on the image data scanned from one side of each of all the manuscripts is approved. Accordingly, since the performance of processing based on the image data scanned is not approved in the bundle of manuscripts in which the fixed image is not formed on another side of either of the manuscripts, the performance of processing based on the image data scanned is prohibited. Consequently, the processing based on said bundle of manuscripts can be prohibited by not forming the fixed image on another side of either of the manuscripts in the bundle of manuscripts having confidentiality, and the load of a manager controlling confidential documents can be reduced.

According to the present invention, when it is judged that the performance of processing based on the image data scanned from one side of the manuscript is not approved, it is informed that the fore-mentioned processing cannot be performed; therefore it can be informed, for example, to a user going to copy the manuscript that he cannot copy it because he has no legal authority.

According to the present invention, since the fixed image is detected from another side of each of a plural number of manuscripts, it is judged that there is approved the performance of processing based on the image data scanned from one side of the manuscript in which the fore-mentioned fixed image is detected. Thus, the performance of processing based on the image data scanned from one side of the manuscript on which the fore-mentioned fixed image is formed can be carried out in the bundle of manuscripts consisting of a plural number of the manuscripts, and the processing based on the image data scanned from one side of the manuscript on which the fore-mentioned fixed image is not formed can be prohibited.

According to the present invention, when the fixed image is detected from another side of each of a plural number of manuscripts and the fixed image is detected from even number of manuscripts, it is judged that there is approved the performance of processing based on the image data from one side of each of the manuscripts from the odd number of manuscript among manuscripts in which the fixed image is detected, to a manuscript in which the fixed image is then detected; therefore the processing based on a plural number of the continuous manuscripts can be performed.

According to the present invention, certification is carried out when the fixed image is detected from another side of manuscripts, and when it is certified as legal, it can be judged that the performance of processing based on the image data scanned from one side of each of all the manuscripts is approved. Accordingly, the processing based on the bundle of manuscripts can be limited by forming the fixed image on another side of either of the manuscripts in the bundle of manuscripts consisting of a plural number of the manuscripts having confidentiality, and the load of a manager controlling confidential documents can be reduced.

According to the present invention, the fixed image is detected from another side of each of a plural number of manuscripts, it is judged that there is approved the performance of processing based on the image data from one side of the manuscript on which the fixed image was not detected, and when the fixed image is detected from either of the manuscripts, certification is carried out. Consequently, the processing based on the manuscript on which the fore-mentioned fixed image was detected can be limited. Further, when it is certified as legal, it is judged that the processing based on the manuscript on which the fore-mentioned fixed image was detected is approved; therefore the performance of processing based on the image data scanned from one side of the manuscript on which the fore-mentioned fixed image was formed can be also carried out in the bundle of manuscripts consisting of a plural number of the manuscripts, if the result of certification is legal.

According to the present invention, when the fixed images are detected from another side of each of a plural number of manuscripts and the fixed images are detected from even number of manuscripts, it is judged that there is approved the performance of processing based on the image data scanned from one side of each of the manuscripts which do not exist from the odd number of manuscripts among manuscripts in which the fixed image is detected, to a manuscript in which the fixed image is then detected, and then certification is carried out. Accordingly, when it is certified as legal, it is judged that there is approved the performance of processing based on the image data scanned from one side of each of the manuscripts from the odd number of manuscripts to a manuscript in which the fixed image is then detected. Accordingly, when the result of certification is legal, the performance of processing based on the image data scanned from a plural number of the continuous manuscripts can be carried out.

According to the present invention, when the fixed image formed on another side of a manuscript is detected, the scanning of the fore-mentioned manuscript is interrupted, and the scanning of an image interrupted is resumed when the result of certification is legal. Thereby, it is possible to reduce processing load in the scanning processing of a manuscript which becomes in vain when the result of certification is not legal and the processing based on the image data scanned from manuscripts is prohibited.

According to the present invention, when it is judged that the performance of processing based on the image data scanned from the manuscript is not approved, it is informed that the fore-mentioned processing cannot be performed; therefore it can be informed, for example, to a user going to copy the manuscript that he cannot copy it because he has no legal authority.

According to the present invention, when it is judged that the performance of processing based on the image data scanned from the manuscript is not approved, the image data which are scanned from the manuscript and temporarily memorized are deleted. Consequently, when the image data scanned from the manuscript for copy has confidentiality, or when the processing indicated by a user cannot be performed because the user who indicated copy processing has no confidentiality, the image data scanned from the manuscript hitherto are not retained in a apparatus itself, therefore the leak of the image data scanned from the manuscript having confidentiality and incorrect use can be surely prevented.

According to the present invention, since a scan means of scanning an image which is formed on one side of the manuscript and an another side scan means of scanning an image which is formed on another side of the manuscript are separately provided, images respectively formed on the frontside and backside of the manuscript can be simultaneously scanned. Further, even if an image which is formed on one side of the manuscript and an image which is formed on another side of the manuscript are separately formed with different inks, images respectively formed on the frontside and backside of the manuscript can be surely scanned.
On the other hand, when it is constituted that an image which is formed on one side of the manuscript and an image which is formed on another side of the manuscript are scanned by the same scan means, the scan means can be shared.

According to the present invention, for example, when the fixed image formed on the backside of the manuscript is an image which does not affect the image data scanned from the image which was formed on the frontside of the manuscript, unnecessary information is not included in the image data scanned from the frontside of the manuscript; therefore when the manuscript is copied, a printed article prevented the deterioration of image quality can be prepared.
The above and further objects and features of the invention will more fully be apparent from the following detailed description with accompanying drawings.

### BRIEF DESCRIPTION OF THE SEVERAL VIEWS OF THE DRAWINGS

FIG. 1 is a block chart illustrating the composition of the image forming system related to the embodiment;
FIG. 2 is a cross sectional view showing the internal composition of a composite machine;
FIG. 3 is a schematic view showing aspect of adding specific information;
FIG. 4 is a schematic view showing one example of print setting screen prepared by a printer driver;
FIG. 5 is a flow chart illustrating the procedure of processing performed in the image forming system related to the embodiment;
FIG. 6 is a flow chart illustrating the procedure of processing performed in the image forming system related to the embodiment;
FIGS. 7A to 7C are schematic views illustrating the recording spot of specific information;
FIG. 8 is a flow chart illustrating the procedure of processing performed in the image forming system related to the embodiment;
FIG. 9 is a flow chart illustrating the procedure of processing performed in the image forming system related to the embodiment;
FIG. 10 is a schematic view showing aspect at scanning a printed article to which specific information is imparted;
FIG. 11 is a flow chart illustrating the procedure of processing at copy processing by a composite machine related to the embodiment 4;
FIG. 12 is a flow chart illustrating the procedure of processing at copy processing by a composite machine related to the embodiment 5;
FIG. 13 is a flow chart illustrating the procedure of processing at copy processing by a composite machine related to the embodiment 6;
FIGS. 14A to 14D are schematic views illustrating the recording spot of specific information;
FIG. 15 is a flow chart illustrating the procedure of processing at copy processing by a composite machine;
FIG. 16 is a flow chart illustrating the procedure of processing at copy processing by a composite machine;
FIG. 17 is a flow chart illustrating the procedure of processing at copy processing by a composite machine related to the embodiment 7;
FIGS. 18A and 18B are schematic views illustrating the recording spot of specific information;
FIG. 19 is a flow chart illustrating the procedure of processing at copy processing by a composite machine;
FIG. 20 is a flow chart illustrating the procedure of processing at copy processing by a composite machine; and
FIG. 21 is a longitudinal cross sectional view showing the variation example of the composition of a manuscript scanning portion provided on a composite machine.

### DETAILED DESCRIPTION OF THE INVENTION

The present invention is specifically illustrated based on the drawings showing Embodiments.

### Embodiment 1

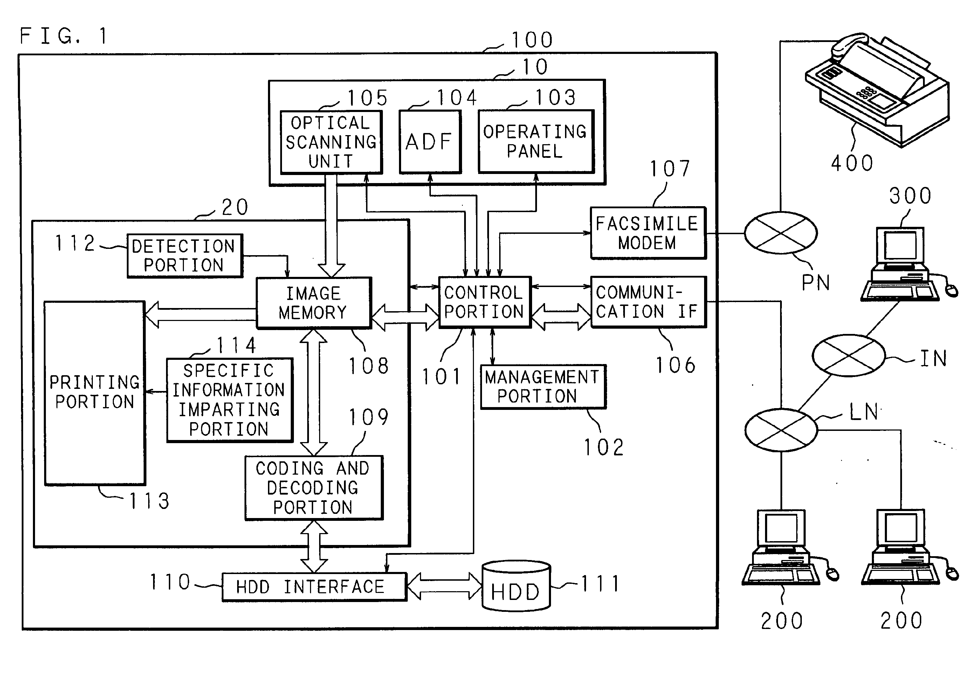

FIG. 1 is a block chart illustrating the composition of the image forming system related to the embodiment.

In the drawing, 100 is a composite machine having a scanner function of scanning the image of a manuscript, a copy function of forming an image on a sheet such as a copy paper or an OHP film (hereinafter, referred to merely as a sheet) based on the image scanned, a print function of forming the image on the sheet by receiving print data transmitted from outside, a filing function of temporarily preserving an image data inputted, an image transmission function of transmitting the image data to outside, and the like. Information processing apparatuses 200 and 200 such as a personal computer are connected with the composite machine 100 through a local area network LN, and an information processing apparatus 300. Further, a facsimile device 400 at outside is connected through a public phone line network PN.

In the information processing apparatuses 200, an application program for preparing graphics and the like and a driver program (printer driver) for utilizing the composite machine 100 through the local area network LN are preliminarily installed, and it is a composition that the printer driver is called out from an arbitrary application program and print data prepared by said printer driver are transmitted to the composite machine 100, thereby a document, a graphics and the like can be outputted.

The facsimile device 400 has a function of coding and decoding the image data by a fixed system, and the facsimile data obtained by coding are designed to be transmitted and received through the public phone line network PN.

When the image data are scanned from a manuscript for copy, or when print data transmitted from the information processing apparatuses 200 and 200 are received, the composite machine 100 carries out image formation on a sheet based on those data. At this time, when the image data gobbled down and the print data received are required to keep confidentiality, it is composed so that images are formed on the frontside (one side) of the sheet based on the image data gobbled down and the print data received, and a fixed image is formed on the backside (another side) of the sheet based on the image data which the composite machine 100 has preliminarily prepared. Further, the fixed image which is added on the backside of the sheet is referred to as specific information.

The composition of the control system of the composite machine 100 is illustrated below.
The composite machine 100 is equipped with CPU for performing various arithmetic processings, ROM for storing a control program and a control portion 101 composed by RAM and the like which retains temporarily data prepared during the arithmetic processing of CPU. The CPU of the control portion 101 controls the motion of a manuscript scanning potion 10, an image formation portion 20 and the like by loading and performing the fore-mentioned control program and functions the whole apparatus as the image forming apparatus related to the present invention.

A management portion 102 is a non volatile semiconductor memory which memorizes various data required during operation of the composite machine 100. Data memorized in the management portion 102 includes data for carrying out the certification of a user, data required for detecting the fore-mentioned specific information and the like.

A communication IF 106 is equipped with a network terminal circuit in accordance with the communication specification of a local area network LN, receives print data from the information processing apparatuses 200 and 200 which are connected with the local area network LN and transmits to the information processing apparatuses 200 and 200 information which should be informed. The communication IF 106 carries out the control of the transmitting and receiving of various data.

A facsimile modem 107 is equipped with the network terminal circuit for connection with the public phone line network PN and transmits and receives facsimile data through the public phone line network PN. Accordingly, the facsimile modem 107 is equipped with a decoding circuit for decoding the facsimile data received, and transfers the image data obtained by decoding to the image forming portion 20 to perform printing processing. Further, the facsimile modem 107 is equipped with a coding circuit for coding the facsimile data which should be transmitted, and transmits the facsimile data which are coded at said coding circuit to the objective facsimile device 400. The facsimile modem 107 performs the transmitting and receiving of the facsimile data and the coding processing and decoding processing of the facsimile data.

The manuscript scanning potion 10 is composed of an operating panel 103, an ADF 104, an optical scanning unit 105 and the like. The operating panel 103 comprises an operation portion receiving operation indication by a user and a display portion displaying information which should be informed to a user. The operation portion is equipped with various operation keys which receive operation indication by a user, and receives the switching operation of functions, the input of setting values, the initiation indication of performance of processing. The display portion is equipped with a liquid crystal display, and displays the operation situation of the composite machine 100, various setting values inputted through the operation portion, information which should be informed to a user, and the like. Further, touch panel type soft ware buttons which were composed so as to receive various selective operations are arranged at the portion of the display portion.

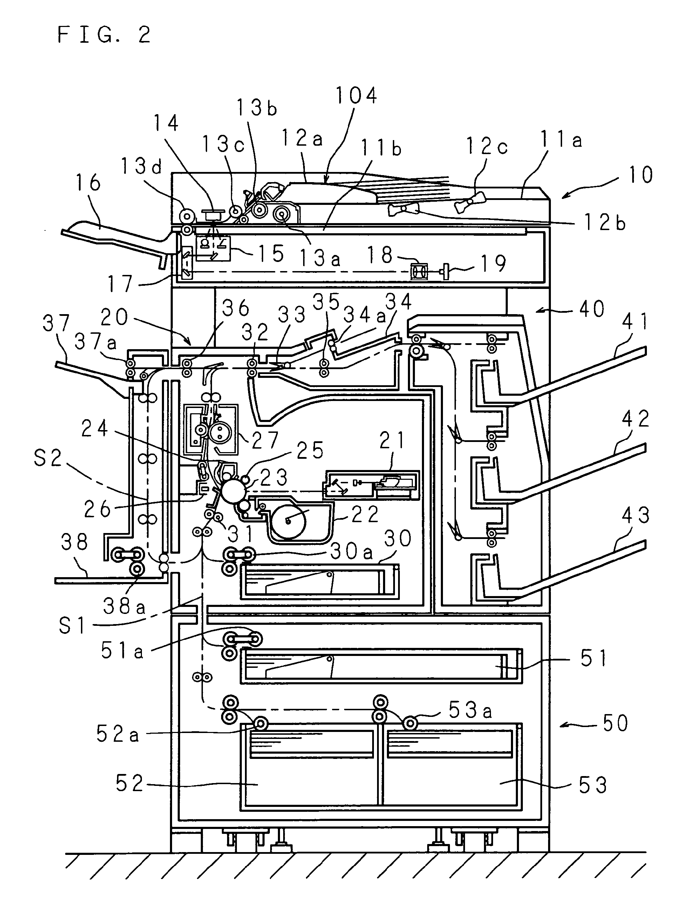

The ADF (Automatic Document Feeder) 104 is equipped with a manuscript tray 11a, a bring-in roller 13a and the like (refer to FIG. 2), and is a composition of taking in manuscripts laminated on the manuscript tray 11a in face-down condition, one by one with the bring-in roller 13a.

The optical scanning unit 105 is equipped with a CIS (Contact Image Sensor) 14, a light source unit 15, a mirror unit 17, an imaging lens 18, a CCD line sensor 19 and the like (refer to FIG. 2), and is composed so that the light source unit 15 irradiates light for scanning on the frontside of a manuscript which is taken in by ADF 104, an optical image from the manuscript is provided on the CCD line sensor 19 using the mirror unit 17 and the imaging lens 18. Further, it is composed so that the CUS 14 scans simultaneously the image recorded on the backside of the manuscript.

An image forming portion 20 is composed of an image memory 108, a coding and decoding portion 109, a detection portion 112, a printing portion 113, a specific information imparting portion 114 and the like. The image memory 108 is a page memory for temporarily memorizing image data gobbled down with the manuscript scanning portion 10, image data which are extracted from print data which are received at the communication IF 106, and the like. The image data memorized in said image memory 108 are transferred to a transferred address in accordance with objective by indication from the control portion 101. Namely, when the image data are preserved by the filing function, they are transferred to HDD 111 through the coding and decoding portion 109 and a HDD interface 110, and transferred to the printing portion 113 when printing processing is carried out.

The coding and decoding portion 109 is equipped with a coding circuit and a decoding circuit for coding the image data which should be stored in the HDD 111 and decoding the image data scanned from the HDD 111. Consequently, the decoding circuit is composed of a buffer for input of inputting data which should be coded, a computing unit of carrying out arithmetic processing which comprises fixed coding algorism, against data set in the input buffer, a buffer for output for retaining the calculation result by the computing unit, and the like. The data which should be coded are inputted in the buffer for input, take out the input data which are set at the buffer for input to carry out the arithmetic processing with the computing unit, and the computing result is written in the buffer for output at a stage of completing the arithmetic processing. Data coded by the coding and decoding portion 109 are gobbled down by taking out data completing computation from the buffer for output. The decoding circuit is also similar and the computing unit carries out the arithmetic processing for data inputted to decode the data.

The HDD 111 having a disc type magnetic recording medium is connected with the coding and decoding portion 109 through the HDD interface 110. The HDD interface 110 issues a command in accordance with the interface specification of the HDD 111 to perform the command and performs the writing processing of data which should be stored, the scanning processing of the data preserved and the deleting processing of the data being unnecessary. The portion of the memory region of the HDD 111 is utilized as a data area for memorizing image data and the like. When a request is received through the operating panel 103, or when a request from the information processing apparatus 200 through the communication IF 106, the image data memorized in the fore-mentioned data area are designed to be read out. Accordingly, when printing processing is required to perform the printing processing again because of the fault of printing processing, the shortage of output copies and the like, the image data memorized in the data area are arbitrarily read out to be able to perform the printing processing.

The detection portion 112 is an image processing circuit for detecting whether a fixed letter string or a fixed image is included or not in the image data temporarily retained in the image memory 108. Namely, the composite machine 100 is composed so as to carry out character identification or pattern matching in order to detect whether the image data gobbled down with the CCD line sensor 19 and the print data received have confidentiality or not and detect whether the fixed letter string or fixed image is included or not. Further, the detection portion 112 is composed so as to carry out character identification or pattern matching for the image data which the CIS 14 gobbled down and detect whether specific information is added or not to the backside of a sheet.

The printing portion 113 is equipped with a charger 25 charging a photoreceptor drum 23 at a fixed potential, a laser recording device 21 emitting laser beam in correspondence with the image data which were received from outside and preparing a static latent image on the photoreceptor drum 23, a developer 22 feeding a toner to the latent image formed on the surface of the photoreceptor drum 23 to develop an image, a transcriber 26 transcribing the toner image which was formed on the surface of the photoreceptor drum 23, on a sheet, and the like (refer to FIG. 2), and an image which a user desires is formed on the sheet by an electrophotographic system.

The specific information imparting portion 114 memorizes the image data related to the fixed image and a position of forming an image in order to impart specific information at the fixed position of backside of the sheet. When it is judged that the image data gobbled down at the manuscript scanning potion 10 or the print data received at the communication IF 106 has confidentiality, it is composed so as to carry out image formation on the backside of the sheet, based on the image data read out from the specific information imparting portion 114.

FIG. 2 is a cross sectional view showing the internal composition of a composite machine 100. The manuscript scanning potion 10 is provided on the uppermost stage of the composite machine 100, and the image forming portion 20 and a paper feeding portion 50 are provided in parallel at its lower portion and the paper feeding portion 50 is arranged at a lower side thereof.

The ADF 104 mounted on the manuscript scanning potion 10 is composed of the manuscript tray 11a for laminating manuscripts for scanning in face down condition, a manuscript regulating board 12a regulating the position to a width direction of the manuscripts mounted, manuscript detecting sensors 12b and 12c detecting the presence or absence of manuscripts on the manuscript tray 11a, a bring-in roller 13a for taking in the manuscripts laminated on the manuscript tray 11a one by one from the lowest layer, conveyance rollers 13b and 13c conveying the manuscript which was taken in by the bring-in roller 13a to a fixed scanning position, and a paper discharge roller 13d discharging the manuscript to the paper discharge tray 16 after scanning the image. The ADF 104 starts to scan using the indication of a user utilizing the operating panel 103 as a trigger and is composed so as to take in the manuscripts laminated on the manuscript tray 11a one by one and to scan images recorded on the frontside and backside of the manuscripts in order.

The optical scanning unit 105 mounted on the manuscript scanning potion 10 is equipped with the CIS 14 for scanning the image recorded on the backside of the manuscript, the light source unit 15 for scanning the image recorded on the frontside of the manuscript, the mirror unit 17, the imaging lens 18, the CCD line sensor 19 and the like.

The CIS 14 is equipped with, for example, image sensors which are arranged in an array and light conducting procedure (lens array such as SELFOC® lenses) and light sources (LED array or fluorescent lamp) and the like, and they are arranged at appropriate scanning positions.

It is composed so that the light source unit 15 focuses luminescent light for scanning which is irradiated from an exposure lamp, on an appropriate scanning position of the manuscript stand 11b by a concave reflector, changes the optical path of reflected light from the manuscript by 90°, with a mirror in which a reflection plane was set at 45° for the plane of the manuscript stand 11b, and leads it to the mirror unit 17. The mirror unit 17 is equipped with a pair of mirrors whose reflection planes are arranged so as to be mutually orthogonalized, in order to further change the optical path of light which was changed to 90° by the mirror of the light source unit 15, to 180°. It is composed so that when the manuscript fed from the ADF 104 is scanned, the light source unit 15 scans the image in a condition in which it is retained at a fixed scanning position (the facing position of CIS 14), and when the manuscript set at the manuscript stand 11b is scanned, the light source unit 15 is scanned in parallel with the plane of the manuscript stand 11b.

Light led by the mirror unit 17 is imaged on the CCD line sensor 19 by action of the imaging lens 18. The CCD line sensor 19 converts light inputted, to analog electric signals in accordance with light intensity. The analog electric signals outputted from the CCD line sensor 19 are converted to digital signals by an AD converter which is not illustrated, the rectification of the light distribution property of a light source at scanning the manuscript, the sensitivity unevenness of the CCD line sensor 19 and the like are carried out, and then they are prepared as the image data. The image data prepared are outputted to the image memory 108 of the image forming portion 20.

The image forming portion 20 is equipped with an electrophotographic process portion comprising a photoreceptor drum 23, a charger 25 charging a photoreceptor drum 23, a laser recording device 21 preparing a static latent image on the photoreceptor drum 23 charged, a developer 22 developing the latent image formed on the surface of the photoreceptor drum 23, a cleaning unit 24 removing a residual developing agent on the photoreceptor drum 23 and regenerating the photoreceptor drum 23, and the like, and the image formation is carried out by conveying sheets to the process portion.

Further, the image forming portion 20 is equipped with a paper feeding cassette 30 for storing sheets on the lower portion (at upstream side) of the process portion, and separates the sheets which were stored by a pick up roller 30a provided at the vicinity of a sheet conveying path S1, one by one to feed them. When the sheets separately fed from the paper feeding cassette 30 are conveyed to the process portion, the sheets are retained once by a resist roller 31. The resist roller 31 controls the edge of the toner image on the photoreceptor drum 23, at a timing matched with the edge of the image forming area of the sheets, and conveys the sheets to the process portion in matching with the rotation of the photoreceptor drum 23.

Further, the paper feeding portion 50 is provided at the lower side of the image forming portion 20 and paper feeding cassettes 51, 52 and 53 are provided for storing plurality kinds of papers. As described above, the paper feeding portion 50 separates the sheets which were stored by pick up rollers 51a, 52a and 53a which are provided at the paper feeding cassettes 51, 52 and 53, one by one to feed them, and conveys them to the process portion of the image forming portion 20 through the sheet conveying path S1.

The sheet on which a toner image was transcribed is conveyed to a fixation unit 27 which is provided at the downstream side of the process portion. The fixation unit 27 is provided with a heat roller and a pressuring roller, and these two rollers sandwich the sheet on which the toner image was transcribed, to be rotated to fix the toner image on the sheet by heating.

The sheets on which the toner image was fixed by heating by the fixation unit 27 are discharged on either of several discharge trays which the composite machine 100 provides. According to the setting of default, a conveyance roller 32 and a switching gate 33 are controlled so that the sheets to be discharged are led to the discharge tray 34, and the sheets are discharged on the discharge tray 34 through a paper discharging roller 34a in face down condition. On the other hand, when a user indicates discharge to paper discharging trays 41, 42 and 43 which are mounted on the paper discharging portion 40, the sheets are led to the paper discharging portion 40 by a conveyance roller 35 by switching the switching gate 33 and discharged to either of the paper discharging trays 41, 42 and 43.

Further, when the sheets are discharged in face up condition, or when image formation is carried out at both sides of the sheet, the sheet is once retained with the conveyance rollers 32 and 35, and then the conveyance rollers 32 and 35 are driven by rotation to a reverse direction to lead the sheet to a both side manuscript conveyance path S2 by the conveyance roller 36. When the sheets are discharged in face up condition, they are discharged to the paper discharging tray 37 through the paper discharging roller 37a. Further, when image formation is carried out at both sides of the sheet, the sheets are led again to the resist roller 31 of the image forming portion 20 through the both side manuscript conveyance path S2, and the toner image is formed on the backside of the sheet at the process portion of the image forming portion 20. Further, a manual tray 38 is provided at the lower end side of the both side manuscript conveyance path S2, and sheets which are not stored in the paper feeding cassettes 30, 51, 52 and 53 are designed to be brought in the pick up roller 38a.

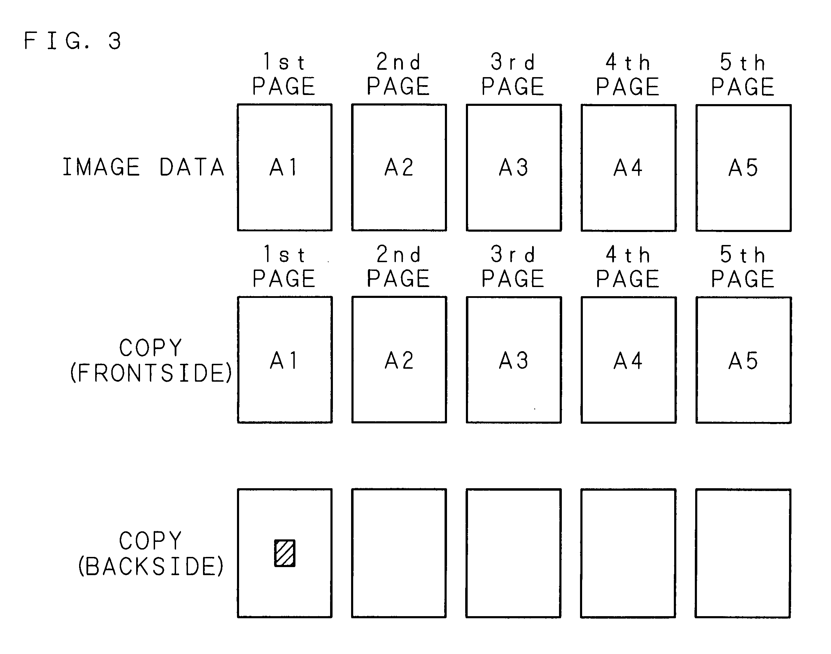

In the present Embodiment, when a printed article outputted has confidentiality, specific information is designed to be added on the backside of a predetermined page. FIG. 3 is a schematic view showing aspect of adding specific information. Information related to an image which should be imparted as the specific information and an image forming position is memorized in the specific information imparting portion 114, and the printing portion 113 is designed to impart the specific information in accordance with information memorized in the specific information imparting portion 114. In an example shown in FIG. 3, aspect in which the specific information is imparted at about the center of the backside of a page one among images for 5 pages.

Further, any of an image which is imparted as the specific information may be good, but its size, color, intensity and the like which are indistinctive are desirable. Further, the specific information is not always an image, but for example, a composition using a letter string, a graphic or a combination thereof may be good.

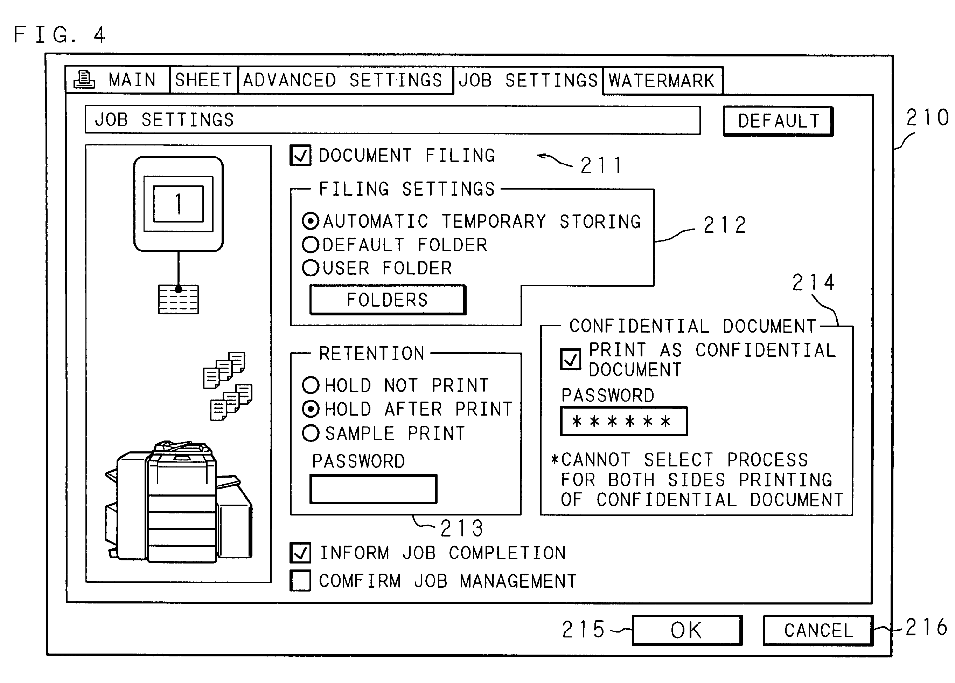

The confidentiality of a printed article outputted is set, for example, at preparing print data with the information processing apparatus 200. FIG. 4 is a schematic view showing one example of print setting screen prepared by a printer driver. The print setting screen 210 shown in FIG. 4 is designed to switch a tag provided on the upper portion of the screen to carry out various settings. A main setting receives settings such as output copies and a range of pages. A paper setting receives the setting of kind of sheets used for output. A high grade setting receives various settings such as a page layout and the allocation number of an image per a sheet.
The setting of a water mark receives the setting of kind of a water mark added on a sheet.

A screen receiving the job setting is equipped with a check box 211 receiving a setting of whether a document filing function is used or not as shown in FIG. 4, a filing setting column 212 setting the use condition of the document filing function, a retention setting column 213 receiving the setting of hold print and the like, and a confidential document setting column 214 receiving the setting of a confidential document. Further, when a performance button 215 provided at the lower portion of the screen is operated by pushing down, print data are prepared at condition set and the print data prepared are transmitted to the composite machine 100. On the other hand, when a cancel button 216 is pushed down, the print data are not prepared and the print setting screen 210 is composed so as to be return to an application called out.

The procedure of processing performed in the image forming system related to the present Embodiment is illustrated below.

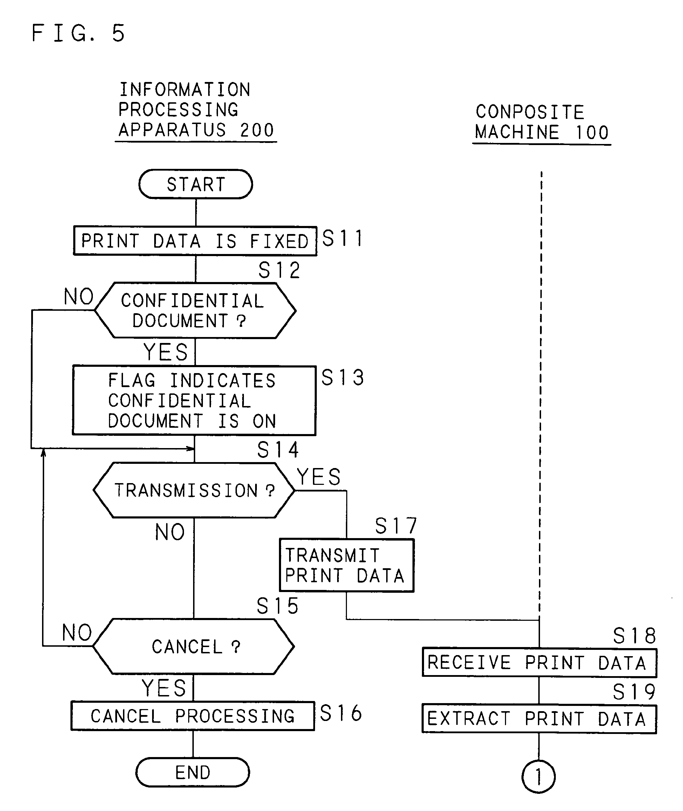

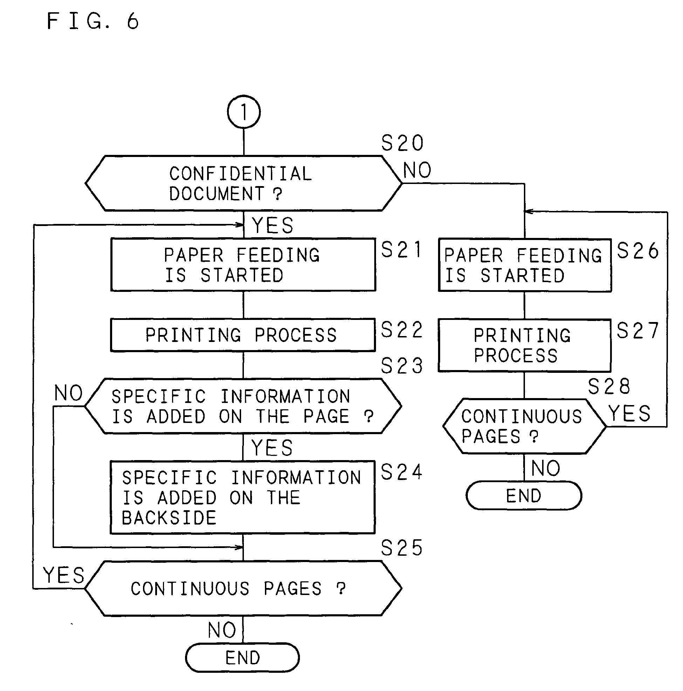

FIGS. 5 and 6 are flow charts illustrating the procedure of processing performed in the image forming system related to Embodiment. A printer driver runs from an arbitrary application program in the information processing apparatus 200, and when print data which are going to be transmitted are fixed (Step S11), the information processing apparatus 200 confirms a setting content in the print setting screen 210 described above and judges whether the print data to be transmitted is a confidential document or not (Step S12). Namely, when a check box provided in a confidential document setting column 214 of the print setting screen 210 is checked, it is judged that the print data which are going to be transmitted are a confidential document.

When it is judged that the print data which are going to be transmitted are a confidential document (S12: YES), a flag related to a confidential document is made ON (Step S13). In the present Embodiment, the flag related to a confidential document is as information included in the print data, and when the flag related to a confidential document is ON, the composite machine 100 outputs the print data as a confidential document, and when flag related to a confidential document is OFF, it outputs as a usual document. When the flag related to a confidential document is ON, or when it is judged that it is not a confidential document (S12: NO), it is judged whether the transmission of the print data should be started or not, by judging whether the performance button 215 of the print setting screen 210 is pushed down or not (Step S14).

When the transmission of the print data should not be started (S14: NO), it is judged whether the transmission of the print data should be cancelled or not by judging whether the cancel button 216 of the print setting screen 210 is pushed down or not (Step S15). When it is judged that it should not be cancelled (S15: NO), the processing is returned to Step S14, and when it is judged that it should be cancelled (S15: YES), cancel processing is carried out (Step S16). The processing of terminating the printer driver which run at the information processing apparatus 200 and the processing to the application program bring-in out the printer driver are carried out in cancel processing.

When it is judged that the print data should be transmitted in Step S14 (S14: YES), the print data are transmitted to the composite machine 100 (Step S17).

When the composite machine 100 receives the print data transmitted from the information processing apparatus 200 (Step S18), the control portion 101 of the composite machine 100 extracts the print data received (Step S19) and judges whether the print data going to be outputted are a confidential document or not (Step S20). The judgment whether they are a confidential document or not is carried out based on the ON/OFF of the flag related to a confidential document. When it is judged that they are a confidential document (S20: YES), paper feeding is started (Step S21), and an image based on the fore-mentioned print data is formed on the surface of a sheet fed to carry out the printing processing (Step S22).

Then, the control portion 101 of the composite machine 100 judges whether the page is a page to which specific information is added or not (Step S23). When it judges that it is a page to which specific information is added (S23: YES), the specific information is added on the backside of the fore-mentioned sheet (Step S24). Specifically, the printing plane is reversed by leading a sheet to the both side manuscript conveyance path S2, and the printing processing is carried out on a side (backside) different from a side recorded, based on the image data scanned from the specific information imparting portion 114, in Step S22.

When the specific information is added on the backside of the sheet, or when it judges in Step S23 that it is not a page to which the specific information is added (S23: NO), it judges whether there are continuous pages or not (Step S25). When it judges that there are continuous pages (S25: YES), the processing is returned to Step S21, and when it is judged that there are no continuous pages (S25: NO), the processing according to the present routine is terminated.

Further, when it is judged that it is not a confidential document in Step S20 (S20: NO), paper feeding is started (Step S26), and the printing processing based on the fore-mentioned print data is carried out on a sheet fed (Step S27). Hereat, when both side printing is assigned by the print data, the sheet is led to the both side manuscript conveyance path S2 and the both side printing is carried out by being conveyed to the printing portion 113 again.
Then, the control portion 101 of the composite machine 100 judged whether there are continuous pages or not (Step S28), and when it is judged that there are continuous pages (S28: YES), the processing is returned to Step S26 and when it is judged that there are no continuous pages (S28: NO), the processing according to the present routine is terminated.

Further, in the present flow chart, when it is assigned that it is a confidential document by the confidential document setting column 214 of the print setting screen 210, it is composed so that the specific information is added on the backside of the sheet printed. However, when "hold without printing" or "hold after printing" is similarly set by the retention setting column 213 of the print setting screen 210, it is also composed so that the specific information is added on the backside of the sheet printed.

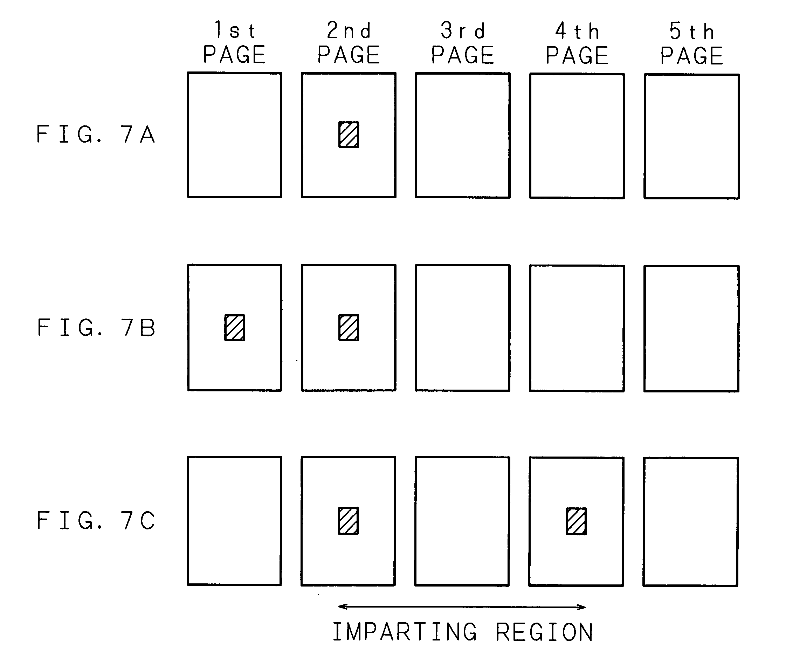

Further, in the present Embodiment, the recording plane on which the specific information is added was set as the backside of the first page, but it may be a composition that it is added to other spot. FIGS. 7A to 7C are schematic views illustrating the recording spot of specific information. The specific information is recorded on the backside of the second page in FIG. 7A. In this case, the management portion 102 memorizes that the specific information is recorded on the second page, and it is detected whether the specific information is imparted or not based on the fore-mentioned information, when the image of a manuscript is scanned through the manuscript scanning portion 10. Further, the specific information is recorded on the backsides of the first page and the second page in FIG. 7B. In this case, the management portion 102 memorizes that the specific information is recorded on the first and the second pages, and it is detected whether the specific information is imparted or not based on the fore-mentioned information, when the images of manuscripts are scanned through the manuscript scanning portion 10. Further, a region imparting the specific information can be determined, and the specific information can be also recorded on the backsides of the starting page and terminating page as shown in FIG. 7C. In this case, the management portion 102 memorizes that the specific information is recorded on the backsides of the starting page and terminating page, and it is detected whether the specific information is imparted or not based on the fore-mentioned information, when the image of a manuscript is scanned through the manuscript scanning portion 10.

Further, it may be a composition that plural kinds of the specific information are used. For example, the first specific information may be recorded on the backside of a sheet by a way of imparting specific information as shown in FIG. 7A, and the second specific information may be recorded on the backside of a sheet by a way of imparting specific information as shown in FIG. 7B.

### Embodiment 2

Embodiment 1 is a composition in which the composite machine 100 imparts specific information when a user himself assigns a confidential document through a printer driver, but when it is judged that the print data received are transmitted by a specific user, it may be a composition that the specific information is imparted. Further, since the composition of the image forming system and the internal composition of the composite machine 100 in the present Embodiment are similar as in Embodiment 1, their illustration is abbreviated.

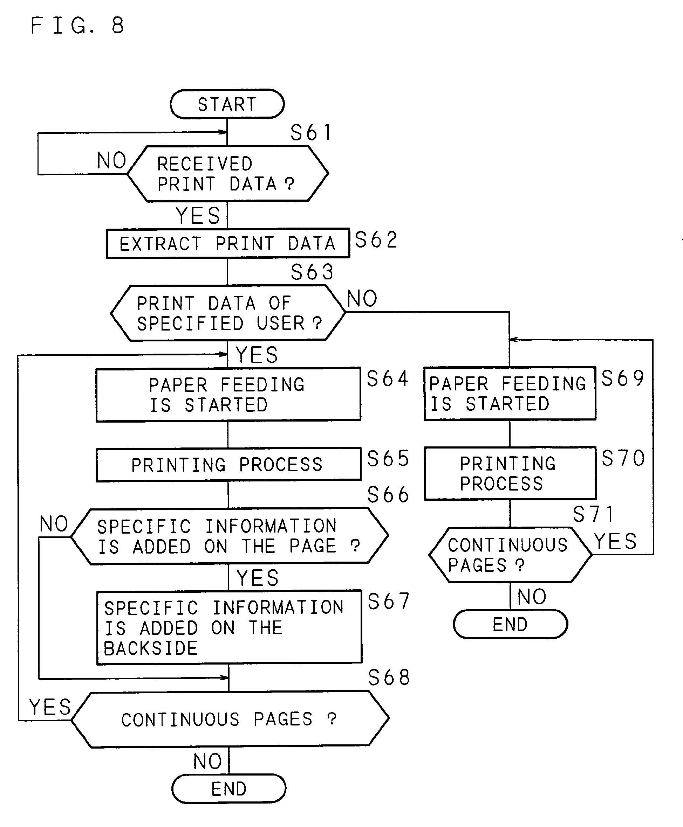

FIG. 8 is a flow chart illustrating the procedure of processing performed in the image forming system related to the embodiment. The control portion 101 of the composite machine 100 judges whether the print data transmitted from the information processing apparatus 200 are received or not by watching the communication IF 106 (Step S61). When it judges that the print data are not received (S61: NO), it waits until the print data are received.
When it judges that the print data are received (S61: YES), it extracts the print data received (Step S62), and the image data obtained by the evolution are retained in the image memory 108.

Then, the control portion 101 judges whether the print data received is the print data of a specified user or not (Step S63). Whether the print data received is the print data of a specified user or not can be judged, for example, by whether the communication address or MAC address of the originating host of the print data corresponds to those registered in the management portion 102 as the apparatus of a specific user or not.

When it judges that they are the print data of a specific user, (S63: YES), paper feeding is started (Step S64) and the image data retained in the image data memory 108 are transferred to the printing portion 113. Then, an image based on the fore-mentioned image data is formed on the surface of a sheet to perform the printing processing (Step S65). Then, the control portion 101 of the composite machine 100 judges whether the page is a page to which specific information is added or not (Step S66). When it judges that it is a page to which specific information is added (S66: YES), the specific information is added on the backside of the fore-mentioned sheet (Step S67).

When the specific information is added on the backside of the sheet, or when it judges in Step S66 that it is not a page to which the specific information is added (S66: NO), it judges whether there are continuous pages or not (Step S68). When it judges that there are continuous pages (S68: YES), the processing is returned to Step S64, and when it judges that there are no continuous pages (S68: NO), the processing according to the present routine is terminated.

Further, when it judges in Step 63 that it is not the print data of a specific user (S63: NO), paper feeding is started (Step S69), and the printing processing based on the fore-mentioned print data is carried out on a sheet fed (Step S70). Then, the control portion 101 of the composite machine 100 judges whether there are continuous pages or not (Step S71), and when it judges that there are continuous pages (S71: YES), the processing is returned to Step S69 and when it judges that there are no continuous pages (S71: NO), the processing according to the present routine is terminated.

### Embodiment 3

Embodiment 2 is a composition in which the specific information is imparted on the backside of a sheet when it is judged the print data received are those transmitted from a specific user, but when a specific image is included in an image which is extacted from the print data received, it may be a composition that the specific information is imparted.

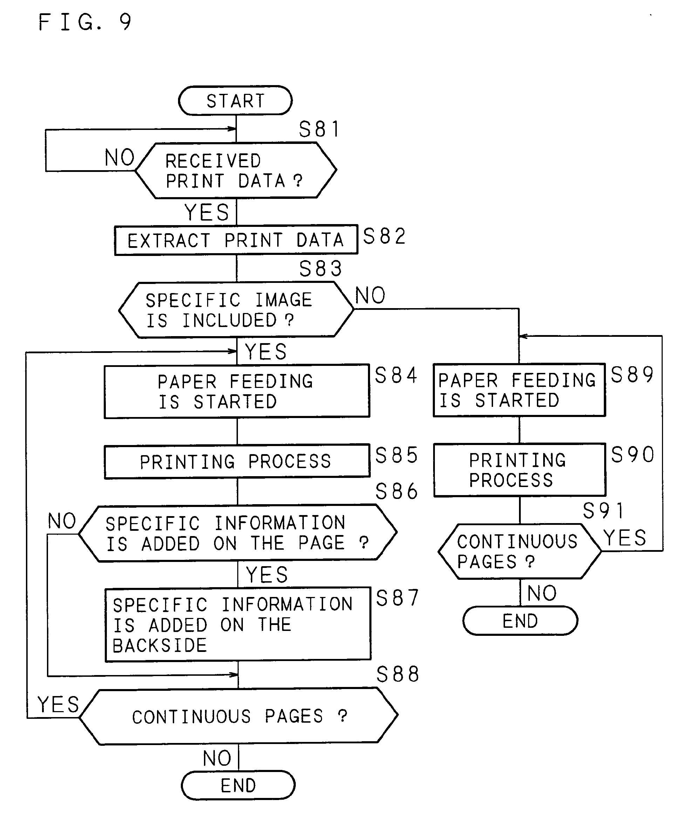

FIG. 9 is a flow chart illustrating the procedure of processing performed in the image forming system related to the embodiment. The control portion 101 of the composite machine 100 judges whether the print data transmitted from the information processing apparatus 200 are received or not by watching the communication IF 106 (Step S81). When it judges that the print data are not received (S81: NO), it waits until the print data are received.
When it judges that the print data are received (S81: YES), it extracts the print data received (Step S82), and the image data obtained by the evolution are retained in the image memory 108.

Then, the control portion 101 judges whether a specific image is included or not based on the image data which are obtained by evolution (Step S83). For example, it judges whether water marks such as "copy is strictly prohibited" and "for internal use only" are included or not in an image going to be outputted, using, for example, a pattern matching procedure.

When it judges that a specific image is included, (S83: YES), paper feeding is started (Step S84) and the image data retained in the image data memory 108 are transferred to the printing portion 113. Then, an image based on the fore-mentioned image data is formed on the surface of a sheet to perform the printing processing (Step S85). Then, the control portion 101 of the composite machine 100 judges whether the page is a page to which specific information is added or not (Step S86). When it judges that it is a page to which specific information is added (S86: YES), the specific information is added on the backside of the fore-mentioned sheet (Step S87).

When the specific information is added on the backside of the sheet, or when it judges in Step S86 that it is not a page to which the specific information is added (S86: NO), it judges whether there are continuous pages or not (Step S88). When it judges that there are continuous pages (S88: YES), the processing is returned to Step S84, and when it judges that there are no continuous pages (S88: NO), the processing according to the present routine is terminated.

When it judges in Step 83 that a specific image is not included (S83: NO), paper feeding is started (Step S89), and the printing processing based on the fore-mentioned print data is carried out on a sheet fed (Step S90). Then, the control portion 101 of the composite machine 100 judges whether there are continuous pages or not (Step S91), and when it judges that there are continuous pages (S91: YES), the processing is returned to Step S89 and when it judges that there are no continuous pages (S91: NO), the processing according to the present routine is terminated.

In Embodiment above, it is composed that the presence or absence of the confidentiality of the print data received through the communication IF 106 is mainly judged, and it is defined whether specific information is imparted or not in accordance with the result of judgment, but the specific information can be also imparted by similar processing for the image data inputted through the manuscript scanning portion 10, when the image data has confidentiality.

### Embodiment 4

In the present Embodiment, the operation of copying a printed article (manuscript) using the composite machine 100 is illustrated. The composite machine 100 is equipped with the detection portion 112 for detecting specific information from the image data gobbled down in the manuscript scanning portion 10, and carries out copy limitation based on the detection result of the detection portion 112. In the present Embodiment, when the specific information is detected from the backside of the first manuscript, the copy of the manuscript is approved and the copy limitation is carried out for a case other than this.

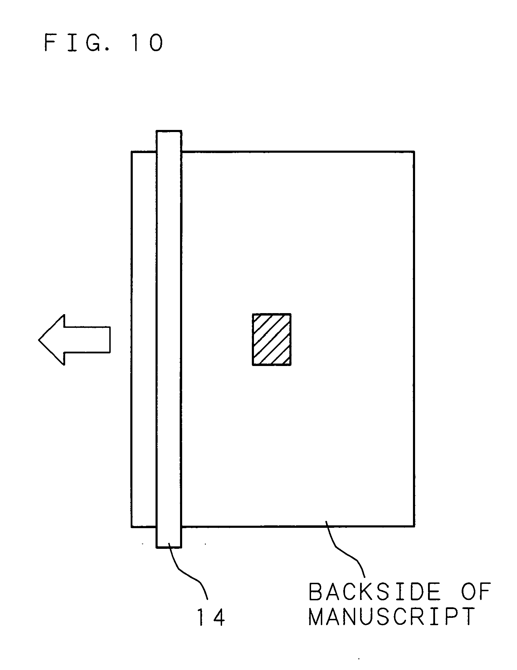

FIG. 10 is a schematic view showing aspect at scanning a printed article to which specific information is imparted, and shows condition in which the manuscript scanning portion 10 shown in FIG. 2 is viewed from an upper side. CIS 14 is continuously fed from ADF 104 of the manuscript scanning portion 10, scans the backside of a manuscript conveyed to a direction which is shown by an outline arrow mark, and is composed so as to gobble down the image data of the backside of a manuscript by gobbling down data at an appropriate sampling cycle when the manuscript for scanning passes the front side of CIS 14. In FIG. 10, an area to which hunting was imparted at the central position of the backside of a manuscript shows the area to which the fore-mentioned specific information was imparted. Further, since the image of the whole face of the manuscript can be scanned in CIS 14, the area to which the specific information is imparted is not always positioned at the center of the manuscript.

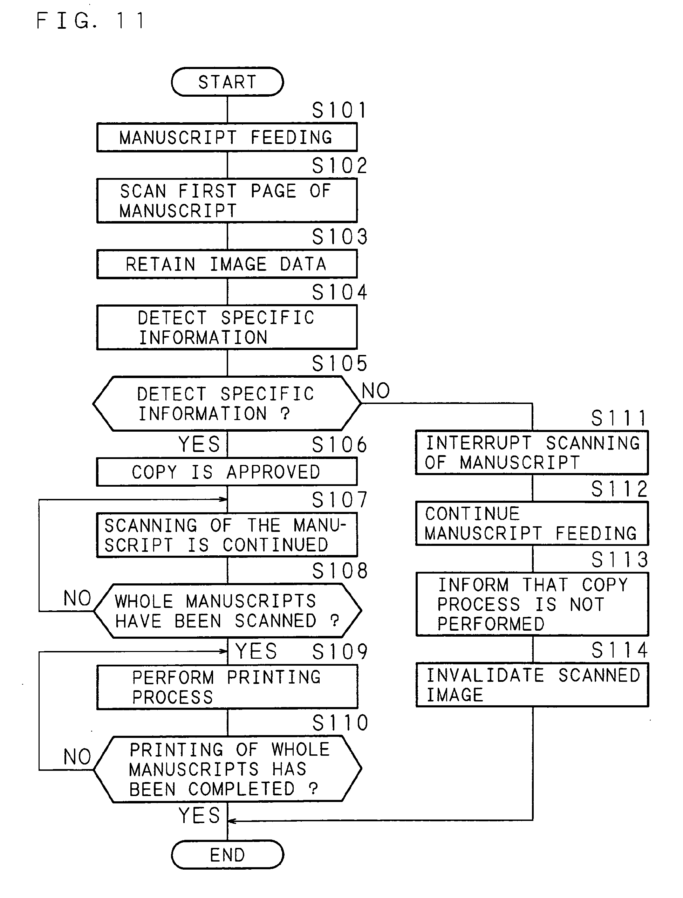

FIG. 11 is a flow chart illustrating the procedure of processing at copy processing by a composite machine 100 related to Embodiment 4. Further, the CPU of the control portion 101 performs the processing below in accordance with a control program stored in the ROM of the control portion 101.

When the manuscript is mounted on the manuscript tray 11a of the composite machine 100 and the copy of the manuscript was indicated through the operating panel 103, the control portion 101 drives the bring-in roller 13a of ADF 104 to start the feed of the manuscript (Step S101). When the first manuscript which was fed by separation one by one by the bring-in roller 13a passes the facing position of CIS 14, the image of the backside of a manuscript is scanned by CIS 14 and the image recorded on the surface of the manuscript is scanned by the CCD line sensor 19 (Step S102).

The images scanned by CIS 14 and the CCD line sensor 19 are outputted as the image data, and retained in the image memory 108 (Step S103). Further, the detection portion 112 carried out the detection of the specific information based on the image scanned by CIS 14 (Step S104). The control portion 101 judges whether the detection portion 112 detected the specific information or not (Step S105), and when it judges that the specific information was detected (S105: YES), copy is approved (Step S106) and the scanning of the manuscript is continued until the scanning of the manuscript is terminated (Step S107).

The control portion 101 judges whether the scanning of the whole manuscripts has been completed or not, based on the presence or absence of the manuscript on the manuscript tray 11a which the manuscript detection sensors 12b and 12c detect (Step S108). When the control portion 101 judges that the scanning of the whole manuscript is not completed (S108: NO), it returns the processing to Step S107 to continue the scanning of the manuscript, and when it judges that the scanning has been completed (S108: YES), the image data which were scanned from the manuscript to be retained in the image memory 108 are transferred to the printing portion 113 to perform the printing processing (Step S109).

The control portion 101 judges whether the printing processing of the whole manuscript has been completed or not (Step S110). When it judges that the printing processing of the whole manuscript was not completed (S110: NO), the processing is returned to Step S109 to continue the printing processing, and when it judges that the printing processing of the whole manuscript was completed (S110: YES), the printing processing is terminated.

Further, when the control portion 101 judges in Step S105 that no specific information was detected (S105: NO), copy is not permitted. In this case, the control portion 101 interrupts the scanning of the manuscript when the manuscript scanning portion 10 is under scanning (Step S111). However, in this case, the control portion 101 does not interrupt the feed of the manuscripts mounted on the manuscript tray 11a and continues it (Step S112). Then, the control portion 101 displays a message that the copy processing of said manuscript is not carried out, on the operating panel 103, and informs it to a user (Step S113). Further, the control portion 101 invalidates the image scanned, by deleting the image data which the image memory 108 retains (Step S114).

Thus, when the specific information is added on the backside of the first manuscript, the copy of all the manuscripts including the first manuscript is approved; therefore a user indicating the copy carries out the copy of a confidential document without having consciousness of security. On the other hand, when the specific information is not added on the backside of the first manuscript, the copy of all the manuscripts including the first manuscript is not approved; therefore copy can be prohibited. Further, with respect to a manuscript whose copy is prohibited, unnecessary scanning processing can be stopped by interrupting the scanning of the manuscript at detecting that the copy of said manuscript is prohibited. Further, even if the scanning processing is interrupted, it can be prevented that a user senses to what manuscript the indication of prohibiting copy is added by feeding all of the manuscripts.

### Embodiment 5

A copy machine related to Embodiment 5 is illustrated bellow. Further, since the internal composition of the copy machine in Embodiment 5 is similar as in the fore-mentioned Embodiment 1, their illustration is abbreviated. Further, Embodiment 4 is a composition that the copy processing of said manuscript can be carried out when the specific information is added on the backside of the manuscript, but the copy machine of Embodiment 5 carries out the certification of a user when the specific information is added on the backside of the manuscript, and the copy processing of said manuscript is designed to be carried out only when the user is certified.

Specifically, in Embodiment 5, the specific information imparted on the backside of the first manuscript indicates that the certification of a user is required at copying said manuscript, and the control portion 101 requests the input of certification data by indicating the input indication of certification data on the operating panel 103, when the specific information is detected by the detection portion 112. Further, the CPU of the control portion 101 carries out the certification processing by judging whether the certification data inputted by a user coincides with data for certification memorized in the management portion 102 or not.

Hereat, when both coincide mutually, namely, when a user is certified as a user having legal authority, the control portion 101 judges that the performance of copy processing of said manuscript was approved, and transfers the image data which the manuscript scanning portion 10 gobbles down, to the printing portion 113. On the other hand, when both do not coincide mutually, namely, when a user was not certified as a user having legal authority, the control portion 101 judges that the performance of copy processing of said manuscript was not approved, and displays that the performance of copy processing cannot be carried out, on the operating panel 103 and informs it to a user. Further, when the control portion 101 judges that the performance of copy processing of said manuscript was not approved, it performs the invalidation of the image scanned, by deleting the image data which are scanned by the manuscript scanning portion 10 and temporarily memorized in the image memory 108.

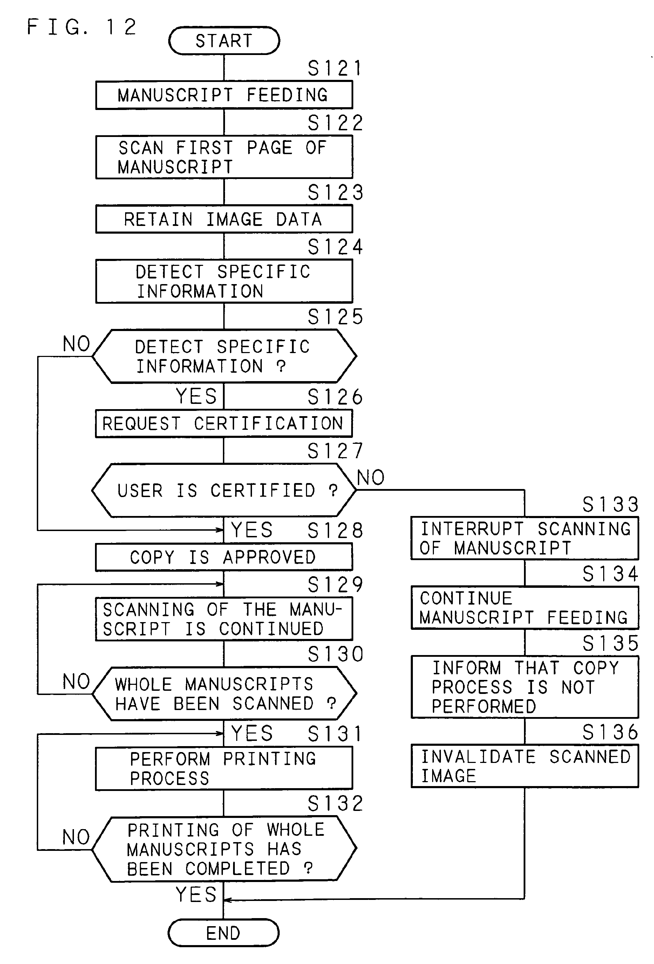

FIG. 12 is a flow chart illustrating the procedure of processing at copy processing by a composite machine 100 related to Embodiment 5. Further, the CPU of the control portion 101 performs the processing below in accordance with the control program stored in the ROM of the control portion 101.

After the processing from the feeding of manuscripts to the detection of specific information (Steps S121 to S124) was performed in like manner as Embodiment 4 as described above, the control portion 101 judges whether the specific information was detected or not (Step S125). When it judges that the specific information was detected (S125: YES), the control portion 101 carries out certification request (Step S126). Specifically, the control portion 101 carries out representation for promoting the input of the certification data, on the display portion of the operating panel 103, and carries out the certification by comparing the certification data which were inputted by a user carrying out copy indication, with data for the certification memorized in the management portion 102.

Further, the control portion 101 judges whether a user was certified or not (Step S127). When it judges that the user was certified (S127: YES), or when it judges that the specific information was not detected in Step S125 (S125: NO), it permits copy (Step S128) and continues the scanning of the manuscript until the scanning of all of the manuscripts is terminated (Step S129).

The control portion 101 judges whether the scanning of all of the manuscripts was completed or not based on the presence or absence of manuscripts on the manuscript tray 11a which the manuscript detection sensors 12b and 12c detect (Step S130).
When the control portion 101 judges that the scanning was not completed (S130: NO), it returns the processing to Step S129 to continue the scanning of the manuscripts, and when it judges that it was completed (S130: YES), it transfers the image data which were scanned from manuscripts and retained in the image memory 108, to the printing portion 113 to perform the printing processing (Step S131).

The control portion 101 judges whether the printing of all of the manuscripts was completed or not (Step S132). When the control portion 101 judges that the printing of all of the manuscripts was not completed (S132: NO), it returns the processing to Step S131 to continue the printing processing, and when it judges that the printing of all of the manuscripts was completed (S132: YES), it terminates the printing processing.

Further, when the control portion 101 judges in Step S127 that the user was not certified (S127: NO), copy is not approved.
In this case, when the manuscript scanning portion 10 is under scanning of the manuscripts, the control portion 101 interrupts the scanning of the manuscripts (Step S133). However, the control portion 101 continues the feeding of manuscripts mounted on the manuscript tray 11a without interruption (Step S134). Then, the control portion 101 displays a message that the copy processing of said manuscript is not carried out, on the operating panel 103, and informs it to a user (Step S135). Further, the control portion 101 invalidates the image scanned, by deleting the image data which the image memory 108 retains (Step S136).

Thus, when the specific information is added on the backside of the first manuscript, the certification of a user for all of the manuscripts including the first manuscript is required; therefore copy is approved, only when a user is certified as a user having legal authority. Thereby, copy by a user other than the user having legal authority is prohibited. Further, when the copy processing is interrupted without the certification of a user, unnecessary scan processing can be stopped by interrupting the scanning of a manuscript. Further, even if the scanning processing is interrupted, it can be prevented that a user senses to what manuscript the indication of prohibiting copy is added by feeding all of the manuscripts.

The composite machine 100 related to Embodiment 5 carries out the certification of a user when the specific information added on the backside of the first manuscript is detected. Hereat, when a user was not certified, the scanning of a manuscript by the manuscript scanning portion 10 is interrupted, but when the composite machine 100 is actuated under condition that the specific information is added on the backside of a fixed number of manuscript in a manuscript bundle comprising a plural number of manuscripts, the scanning of a manuscript is interrupted at a time of judging that the certification of a user is required during the scanning of a manuscript, and the scan processing which has been interrupted can be composed so as to be resumed when he is certified as legal.

### Embodiment 6

Embodiments 4 and 5 are a composition in which the specific information added on the backside of the first manuscript is detected and the following processing is determined in accordance with the result of detection, but it may be a composition that images of all of the manuscripts mounted on the manuscript tray 11a are scanned by the manuscript scanning portion 10, and it is detected whether the specific information is included or not in image data equivalent to the backside of a fixed number of manuscript from the image data scanned.

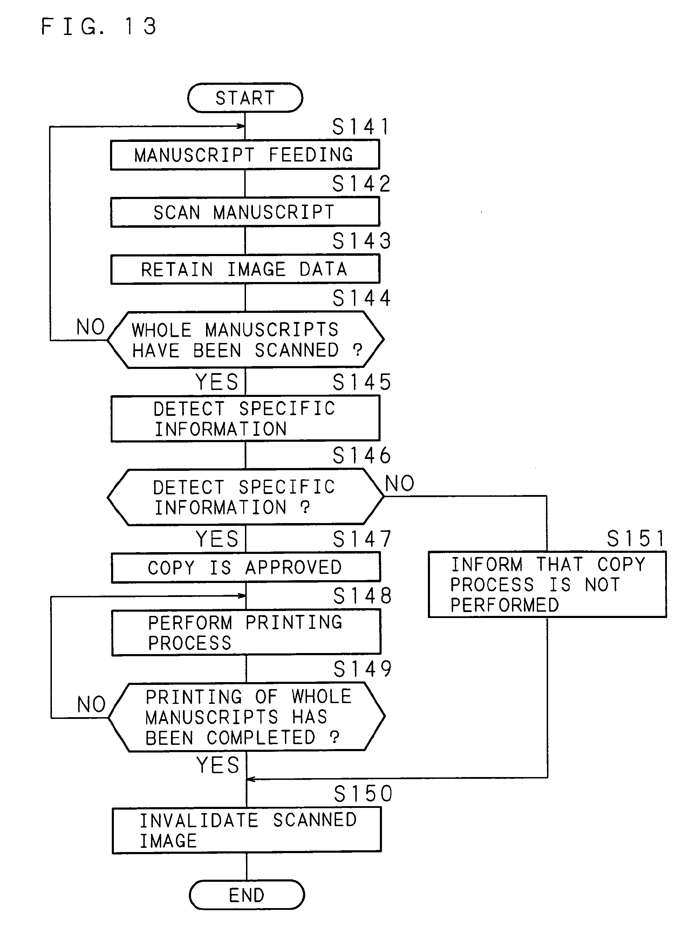

FIG. 13 is a flow chart illustrating the procedure of processing at copy processing by a composite machine related to Embodiment 6. Further, the internal composition of the composite machine 100 is quite similar as the fore-description, and the CPU of the control portion 101 performs the following processing in accordance with the control program stored in the ROM of the control portion 101.

When a manuscript is mounted on the manuscript tray 11a of the composite machine 100 and the copy indication of the manuscript is carried out through the operating panel 103, the control portion 101 actuates the bring-in roller 13a of ADF 104 to start the feeding of manuscripts (Step S141). When the first manuscript which was fed by separation one by one by the bring-in roller 13a passes the facing position of CIS 14, the image of the backside of a manuscript is scanned by CIS 14 and the image recorded on the surface of the manuscript is scanned by the CCD line sensor 19 (Step S142).

The images scanned by CIS 14 and the CCD line sensor 19 are outputted as the image data, and retained in the image memory 108 (Step S143). The control portion 101 judges whether the scanning of all of the manuscripts was completed or not based on the presence or absence of the manuscript on the manuscript tray 11a which the manuscript detection sensors 12b and 12c detected (Step S 144), and when it judges that it was not completed (S 144: NO), the processing is returned to Step S141 and the feeding and scanning of the manuscripts is continued (Steps S141 to S143).

When the control portion 101 judges that the scanning of the whole manuscripts has been completed (S144: YES), the detection portion 112 detects specific information based on the image data which were scanned by CIS 14 (Step S145). Hereat, for example, it detects whether the specific information is included or not in the image data equivalent to the backside of the second manuscript among the image data which were scanned. The control portion 101 judges whether the detection portion 112 detects specific information or not (Step S146), and when it judges that the specific information was detected (S146: YES), it approves copy (Step S147) and transfers the image data which were scanned from the manuscript to be retained in the image memory 108 to the printing portion 113 to perform the printing processing (Step S148).

The control portion 101 judges whether the printing of the whole manuscripts has been completed or not (Step S149). When it judges that the printing processing of the whole manuscripts was not completed (S149: NO), the processing is returned to Step S148 to continue the printing processing (Step S148). Further, when the control portion 101 judges that the printing processing of the whole manuscripts was completed (S149: YES), the invalidation of the images scanned is carried out by deleting the image data which the image memory 108 retains (Step S150) and the printing processing is terminated.

On the other hand, when the control portion 101 judges in Step S146 that no specific information was detected by the detection portion 112 (S146: NO), copy is not permitted. In this case, the control portion 101 displays a message that the copy processing of a manuscript bundle of copy objective is not carried out, on the operating panel 103, and informs it to a user (Step S151). Further, the control portion 101 invalidates the images scanned, by deleting the image data which the image memory 108 retains (Step S150) and the copy processing is terminated.

Thus, when the specific information is added on the backside of the second manuscript among a manuscript bundle of copy objective, the copy of all of the manuscripts including the second manuscript is approved; therefore a user indicating the copy carries out the copy of a confidential document without having consciousness of security. On the other hand, when the specific information is not added on the backside of the second manuscript, the copy of all of the manuscripts including the second manuscript is not approved; therefore copy can be prohibited.

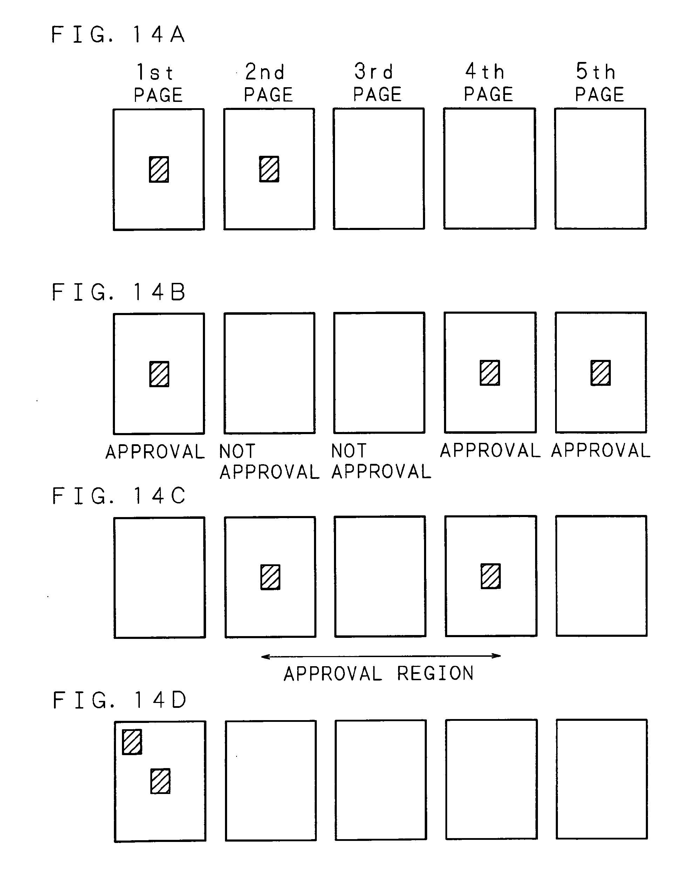

In the flow chart described above, an example in which the specific information for approving copy based on the manuscript bundle is added on the backside of the second manuscript was illustrated, but it may be added on the backside of other than the second manuscript. FIGS. 14 is a schematic view illustrating the recording spot of specific information. In FIG. 14A, the specific information is added on the backsides of the first page and the second page. In this case, the management portion 102 memorizes information that the specific information is added on the first page and the second page, and it is detected whether the specific information is added or not on the backsides of the first page and the second page, based on the image data which are scanned from the backside of each of the manuscripts by the CIS 14 of the manuscript scanning portion 10 and memorized in the image memory 108. Hereat, when the specific information was detected on the backsides of the first page and the second page, the copy of said manuscript bundle is approved, and when either of these is not detected, the copy of said manuscript bundle is not approved.

Further, as shown in FIG. 14B, it may be a composition that the specific information is added on the backside of each of the manuscripts to which copy is approved. In this case, the management portion 102 memorizes information that the copy of manuscripts in which the specific information is added on the backside is approved, and it detects whether the specific information is added or not on the backsides of each of the manuscripts, based on the image data which are scanned from the backside of each of the manuscripts by the CIS 14 of the manuscript scanning portion 10 and memorized in the image memory 108.

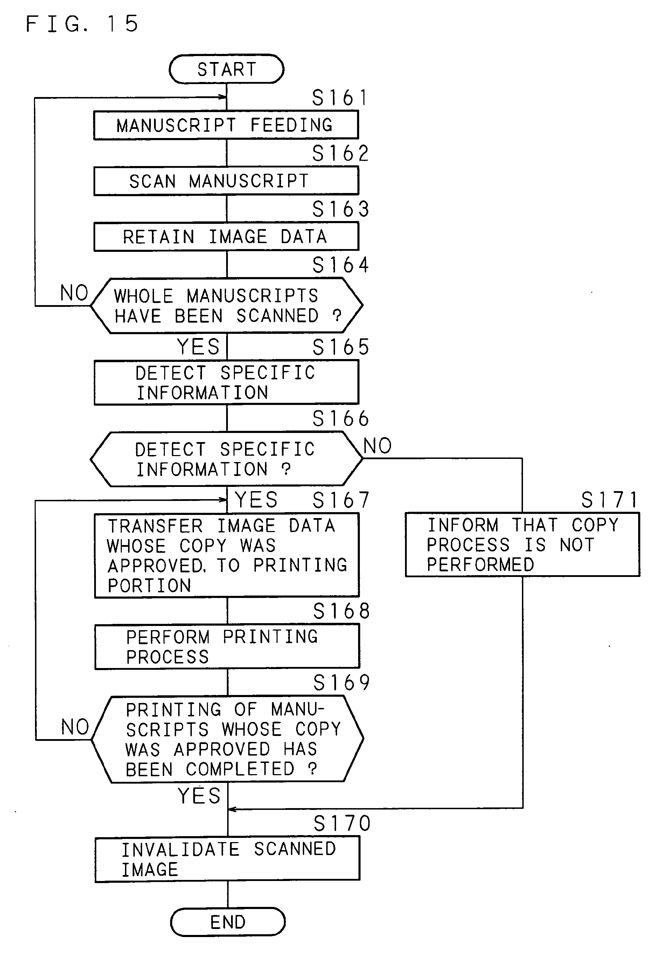

Below is illustrated the copy processing by the composite machine 100 which is actuated under condition in which the copy of manuscripts in which the specific information is added on the backside is approved and the copy of manuscripts in which the specific information is not added on the backside is not approved. FIG. 15 is a flow chart illustrating the procedure of processing at copy processing by a composite machine 100. Further, the CPU of the control portion 101 performs the following processing in accordance with the control program stored in the ROM of the control portion 101.

After the control portion 101 of the composite machine 100 carries out the processing from the feeding of manuscripts to the detection of specific information (Steps S161 to S165) in like manner as the flow chart shown in FIG. 13, it judges whether the specific information was detected or not (Step S166). Hereat, it detects of what page of the manuscripts the specific information was added on the backside in the manuscript bundle which the manuscript scanning portion 10 scans. When the control portion 101 judges that the specific information was detected (S166: YES), namely, when the manuscript in which the specific information was added on the backside is included in the manuscript bundle of scanning objective, it approves the copy of the manuscript, transfers the image data whose copy was approved, among the image data which were scanned from manuscripts and retained in the image memory 108, to the printing portion 113 (Step S167) and performs the printing processing (Step S168).

The control portion 101 judges whether the printing of the whole manuscripts whose copy was approved has been completed or not (Step S169). When it judges that the printing processing of the whole manuscripts was not completed (S169: NO), the processing is returned to Step S 169 to continue the printing processing. Further, when the control portion 101 judges that the printing processing of the whole manuscripts whose copy was approved was completed (S169: YES), the invalidation of the images scanned is carried out by deleting the image data which the image memory 108 retains (Step S170) and the printing processing is terminated.

On the other hand, when the control portion 101 judges in Step S166 that no specific information was detected by the detection portion 112 (S166: NO), namely, when the manuscript in which the specific information was added on the backside is not included in the manuscript bundle of scanning objective, the copy of the whole manuscripts is not permitted. In this case, the control portion 101 displays a message that the copy processing of said manuscript bundle is not carried out, on the operating panel 103, and informs it to a user (Step S171). Further, it invalidates the images scanned, by deleting the image data which the image memory 108 retains (Step S170) and the copy processing is terminated.

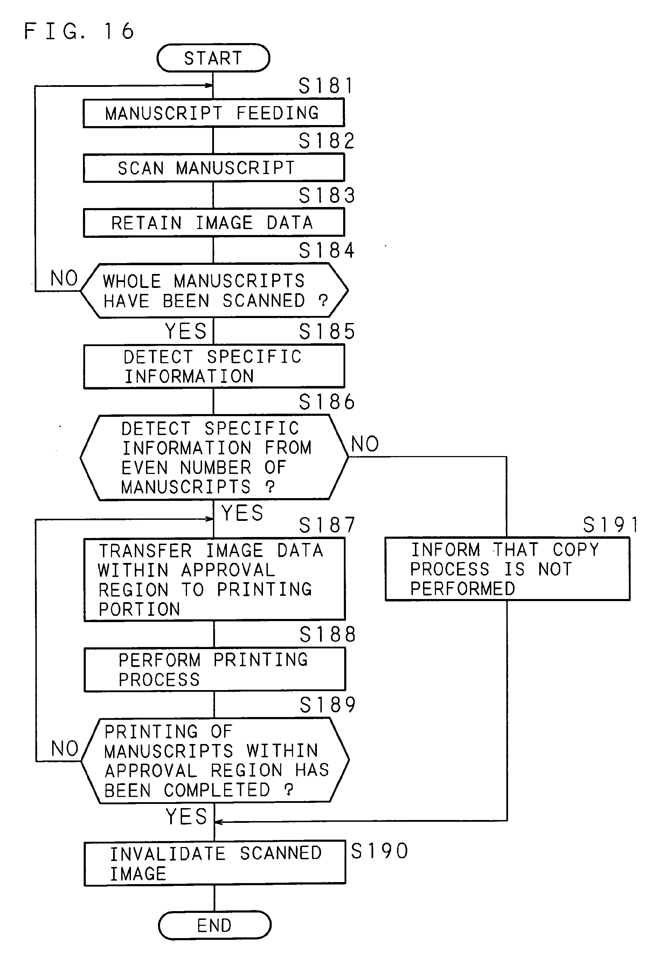

Further, as shown in FIG. 14C, when the manuscripts whose copy was approved are succeeded, a region in which the continuous manuscripts are included is referred to as an approval region, and it may be composed so as to add the specific information on the backsides of the initial page and the terminal page. FIG. 16 is a flow chart illustrating the procedure of processing at copy processing by the composite machine 100. Further, the CPU of the control portion 101 performs the following processing in accordance with the control program stored in the ROM of the control portion 101. Further, in this case, the management portion 102 memorizes information that the specific information is added on the initial page and the terminal page, and it is detected whether the specific information is added or not on the backsides of each of the manuscripts, based on the image data which are scanned from the backside of each of the manuscripts by the CIS 14 of the manuscript scanning portion 10 and memorized in the image memory 108.

After the control portion 101 carries out the processing from the feeding of manuscripts to the detection of specific information (Steps S181 to S185) in like manner as the fore-description, it judges whether the specific information was detected or not from an even number of manuscripts among a manuscript bundle of scanning objective (Step S186). When the control portion 101 judges that the specific information was detected from an even number of manuscripts (S186: YES), it approves the copy of the manuscript within an approval region sandwiched by these manuscripts including an odd number of manuscripts among manuscripts in which the specific information was detected and then manuscripts in which the specific information was detected, transfers the image data corresponding to the manuscripts within an approval region in which copy was approved, among the image data which were retained in the image memory 108, to the printing portion 113 (Step S187) and performs the printing processing (Step S 188) .

The control portion 101 judges whether the printing of the whole manuscripts within the approval region has been completed or not (Step S189). When it judges that the printing of the whole manuscripts was not completed (S189: NO), it returns the processing to Step S187 to continue the printing processing. Further, when the control portion 101 judges that the printing processing of the whole manuscripts within the approval region was completed (S189: YES), the invalidation of the images scanned is carried out by deleting the image data which the image memory 108 retains (Step S190) and the printing processing is terminated.

On the other hand, when the control portion 101 judges in Step S186 that no specific information was detected from an even number of manuscripts (S186: NO), the copy of the whole manuscripts is not permitted. In this case, the control portion 101 displays a message that the copy processing of said manuscript bundle is not carried out, on the operating panel 103, and informs it to a user (Step S191). Further, it invalidates the images scanned, by deleting the image data which the image memory 108 retains (Step S190) and the copy processing is terminated.

As described above, the image scanner of the present invention can limit copy based on the manuscript of scan objective in accordance with conditions respectively set, even if the recording spot of the specific information on the backside of the manuscript which shows whether copy in a manuscript bundle of copy objective is approved or not is changed. Further, in the fore-mentioned Embodiment, it was illustrated that one specific information was added on the backside of the manuscript, but as shown in FIG. 14D, the specific information may be recorded on the backside of the manuscript in plurality.

### Embodiment 7

A copy machine related to Embodiment 7 is illustrated bellow. Further, since the internal composition of the copy machine in the present Embodiment is similar as mentioned above, their illustration is abbreviated. Further, the composite machine 100 of Embodiment 6 was a composition that the copy processing of said manuscript can be carried out when the specific information is added on the backside of the manuscript, but the copy machine of the present Embodiment carries out the certification of a user when the specific information is added on the backside of the manuscript, and the copy processing of said manuscript bundle is composed so as to be able to be carried out only when the user is certified.

Specifically, in the present Embodiment, the specific information imparted on the backside of the second manuscript among the manuscript bundle of processing objective indicates that the performance of the copy processing of said manuscript bundle is not permitted, namely, that the certification of a user is required, and the control portion 101 requests the input of certification data by indicating the input indication of certification data on the operating panel 103, when the specific information was detected on the backside of the second manuscript by the detection portion 112. Further, the CPU of the control portion 101 judges whether the certification data inputted by a user coincides with data for certification memorized in the management portion 102 or not, by loading the certification processing program which is memorized in ROM in RAM and performing it.

Hereat, when both coincide mutually, namely, when a user is certified as a user having legal authority, the control portion 101 judges that the performance of copy processing of said manuscript bundle was approved, and transfers the image data which were scanned by the manuscript scanning portion 10 and memorized in the image memory 108, to the printing portion 113. On the other hand, when both do not coincide mutually, namely, when a user was not certified as a user having legal authority, the control portion 101 judges that the performance of copy processing of said manuscript was not approved, and displays that the performance of copy processing cannot be carried out, on the operating panel 103 and informs it to a user. Further, when the control portion 101 judges that the performance of copy processing of said manuscript was not approved, it performs the invalidation of the image scanned, by deleting the image data which are scanned by the manuscript scanning portion 10 and temporarily memorized in the image memory 108.

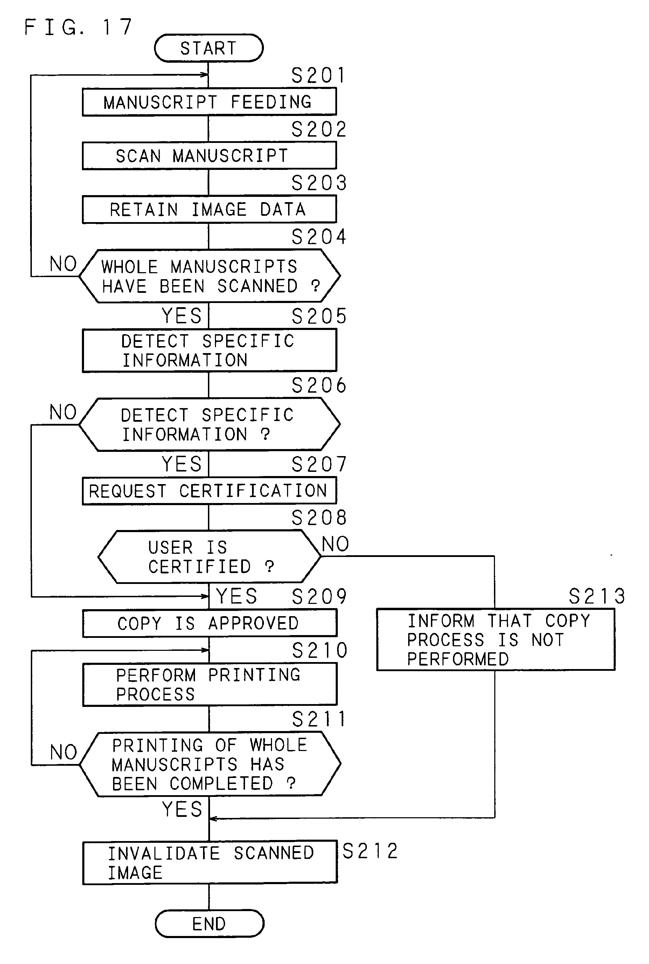

The copy processing by the composite machine 100 of the present Embodiment is illustrated below. FIG. 17 is a flow chart illustrating the procedure of processing at copy processing by a composite machine related to the embodiment 7. Further, the CPU of the control portion 101 performs the processing below in accordance with the control program stored in the ROM of the control portion 101.

After the control portion 101 of the composite machine 100 performed the processing from the feeding of manuscripts to the detection of specific information (Steps S201 to S205) as described above, the control portion 101 judges whether the specific information was detected or not (Step S205). Hereat, it detects whether the specific information is added or not on the backside of the second manuscript in the manuscript bundle which the manuscript scanning portion 10 scans. When the control portion 101 judges that the detection portion 112 detected the specific information (S206: YES), it carries out certification request (Step S207). Specifically, the control portion 101 carries out representation for promoting the input of the certification data, on the display portion of the operating panel 103, and carries out the certification by comparing the certification data which were inputted by a user carrying out copy indication, with data for the certification memorized in the management portion 102.

Further, the control portion 101 judges whether a user was certified or not (Step S208). When it judges that the user was certified (S208: YES), or when it judges that the specific information was not detected in Step S206 (S206: NO), it permits copy (Step S209) and transfers the image data which were scanned from all of the manuscripts and memorized in the image memory 108, to the printing portion 113, to perform the printing processing (Step S210).

The control portion 101 judges whether the printing of all of the manuscripts was completed or not (Step S211), and when it judges that the printing of all of the manuscripts was not completed (S211: NO), it returns the processing to Step S210 to continue the printing processing. Further, when the control portion 101 judges that the printing of all of the manuscripts was completed (S211: YES), it performs the invalidation of the image scanned, by deleting the image data which are memorized in the image memory 108 (Step S212), and the printing processing is terminated.

On the other hand, when the control portion 101 judges in Step S208 that the user was not certified (S208: NO), copy is not approved. In this case, the control portion 101 displays a message that the copy processing of said manuscript bundle is not carried out, on the operating panel 103, and informs it to a user (Step S213). Further, the control portion 101 invalidates the image scanned, by deleting the image data which the image memory 108 retains (Step S212) and the copy processing is terminated.

In the present Embodiment as described above, when the specific information is added on the backside of the second manuscript among the manuscript bundle being processing objective, the certification of a user for all of the manuscripts including the second manuscript is required; therefore copy is approved, only when a user is certified as a user having legal authority. Thereby, copy by a user other than the user having legal authority is prohibited.

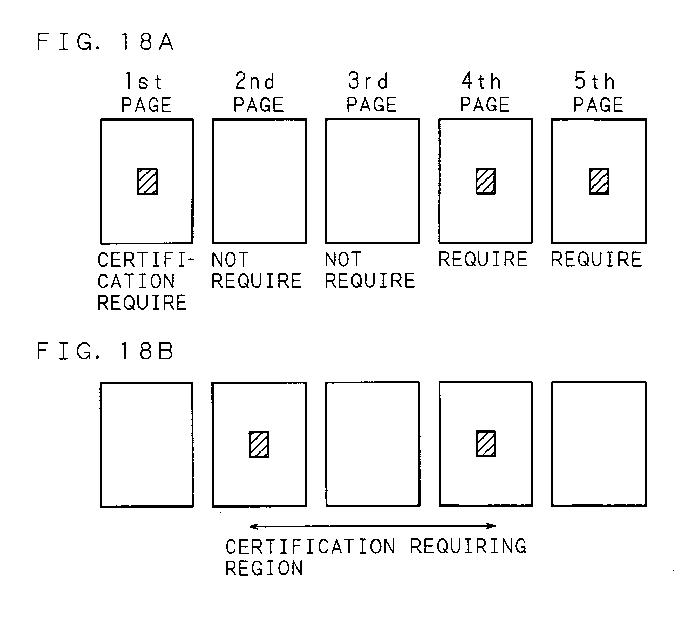

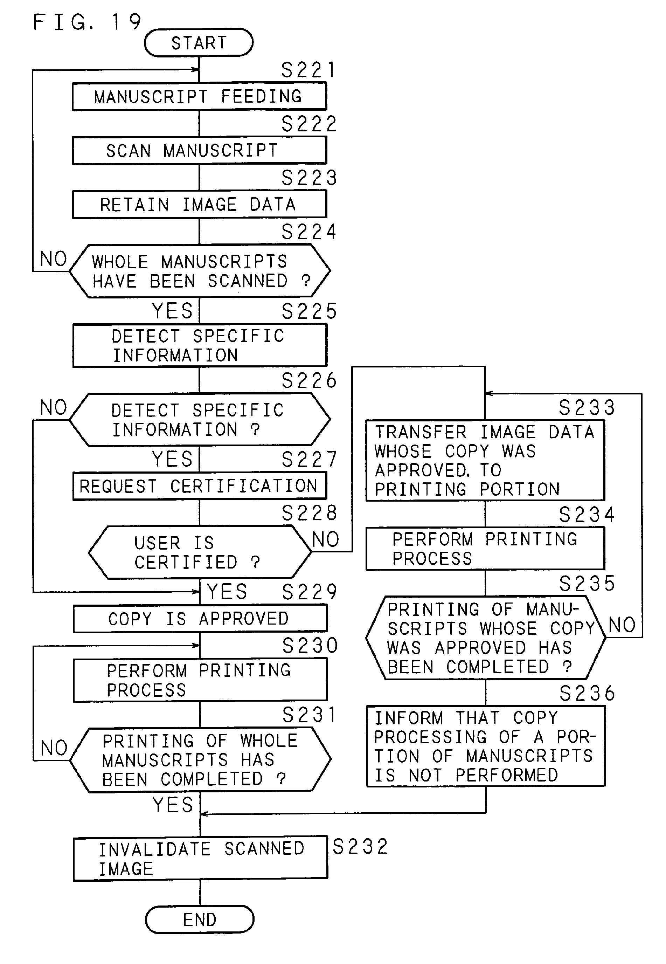

In the present Embodiment as described above, an example that the specific information for limiting copy based on the manuscript bundle is added on the backside of the second manuscript was illustrated, but it may be a composition that copy limitation is carried out based on the specific information which is added on the backside of the manuscript other than the second manuscript. FIGS. 18A and 18B are schematic views illustrating the recording spot of specific information. FIG. 18A shows aspect of adding the specific information on the backside of each of the manuscript whose copy is approved. The operation of the copy processing which the composite machine 100 performs under such condition is illustrated as follow. FIG. 19 is a flow chart illustrating the procedure of processing at copy processing by a composite machine 100. Further, the CPU of the control portion 101 performs the processing below in accordance with the control program stored in the ROM of the control portion 101.

Further, in this case, the management portion 102 memorizes the information that certification is required when the copy of manuscripts in which the specific information is added on the backside is carried out, and it is detected whether the specific information is added or not on the backside of each of the manuscripts, based on the image data which are scanned from the backside of each of the manuscripts by the CIS 14 of the manuscript scanning portion 10 and memorized in the image memory 108. Further, the manuscripts in which the specific information is not added on the backside shall be able to be copied without carrying the certification.

After the control portion 101 of the composite machine 100 performed the processing from the feeding of manuscripts to the detection of specific information (Steps S221 to S225) as described above, the control portion 101 judges whether the specific information was detected or not (Step S226). Hereat, it detects on the backside of what page of the manuscript the specific information is added in the manuscript bundle which the manuscript scanning portion 10 scans. When the control portion 101 judges that the specific information was detected (S226: YES), namely, when the manuscripts in which the specific information is added on the backside is included in the manuscript bundle of a scanning objective, certification is required (Step S227).

Further, the control portion 101 judges whether a user was certified or not (Step S228). When it judges that the user was certified (S228: YES), or when it judges that the specific information was not detected in Step S226 (S226: NO), it permits copy (Step S229) and transfers the image data which were scanned from all of the manuscripts and memorized in the image memory 108, to the printing portion 113, to perform the printing processing (Step S230).

The control portion 101 judges whether the printing of all of the manuscripts was completed or not (Step S231), and when it judges that the printing of all of the manuscripts was not completed (S231: NO), it returns the processing to Step S230 to continue the printing processing. Further, when the control portion 101 judges that the printing of all of the manuscripts was completed (S231: YES), it performs the invalidation of the image scanned, by deleting the image data which are memorized in the image memory 108 (Step S232), and the printing processing is terminated.

On the other hand, when the control portion 101 judges in Step S228 that the user was not certified (S228: NO), the copy of only manuscripts in which the specific information was not detected in Step S225 is approved. Further, the control portion 101 transfers only the image data whose copy was approved among the image data which were retained in the image memory 108, to the printing portion 113 (Step S233), to perform the printing processing (Step S234).

The control portion 101 judges whether the printing of the whole manuscripts whose copy was approved has been completed or not (Step S235), and when it judges that the printing of the whole manuscripts was not completed (S235: NO), it returns the processing to Step S233 to continue the printing processing. Further, when the control portion 101 judges that the printing processing of the whole manuscripts whose copy was approved was completed (S235: YES), it displays a message that the copy processing of a portion of the manuscripts among said manuscript bundle is not carried out, on the operating panel 103, and informs it to a user (Step S236). Further, it invalidates the images scanned, by deleting the image data which the image memory 108 retains (Step S232), and the copy processing is terminated.

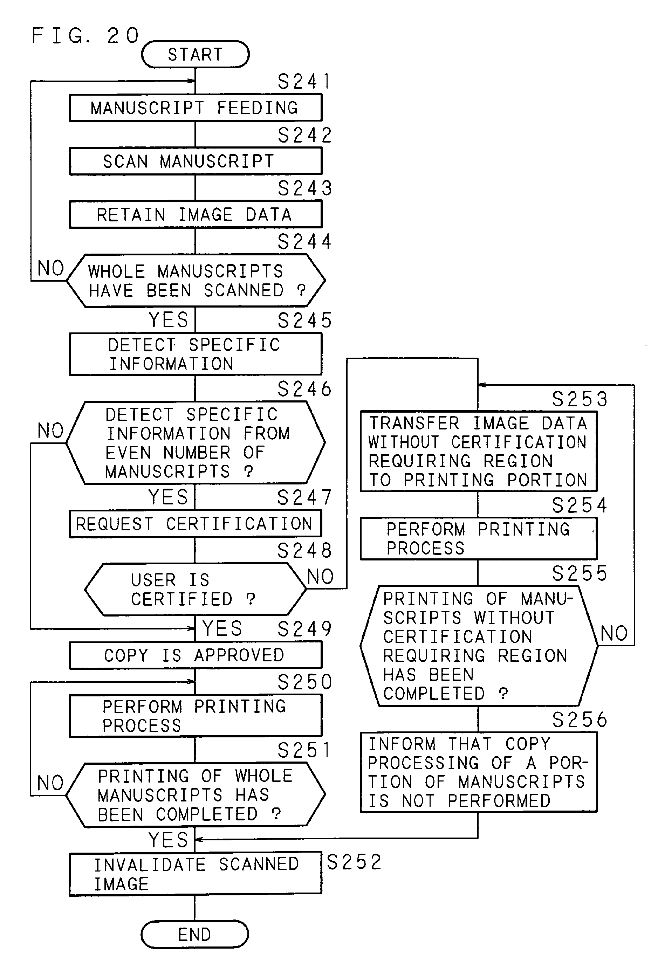

Further, as shown in FIG. 18B, a region in which the manuscripts requiring certification at carrying out copy are continued is referred to as a certification requiring region, and the certification requiring region may be composed so as to limit copy based on the specific information which was added on the backsides of the initial page and the terminal page. FIG. 20 is a flow chart illustrating the procedure of processing at copy processing by a composite machine 100. Further, the CPU of the control portion 101 performs the following processing in accordance with the control program stored in the ROM of the control portion 101. Further, in this case, the management portion 102 memorizes information that certification is required when the manuscripts in the certification requiring region are copied, and it is detected whether the specific information is added or not on the backsides of each of the manuscripts, based on the image data which are scanned from the backside of each of the manuscripts by the CIS 14 of the manuscript scanning portion 10 and memorized in the image memory 108.

After the control portion 101 of the composite machine 100 carries out the processing from the feeding of manuscripts to the detection of specific information (Steps S241 to S245) in like manner as the fore-description, it judges whether the specific information was detected or not from an even number of manuscripts among a manuscript bundle of scanning objective (Step S246). When the control portion 101 judges that the specific information was detected from an even number of manuscripts (S246: YES), it carries out the certification (Step S247).

Further, the control portion 101 judges whether a user was certified or not (Step S248). When it judges that the user was certified (S248: YES), or when it judges that the specific information was not detected in Step S246 from an even number of manuscripts (S246: NO), it permits copy (Step S249) and transfers the image data which were scanned from all of the manuscripts and memorized in the image memory 108, to the printing portion 113, to perform the printing processing (Step S250).

The control portion 101 judges whether the printing of all of the manuscripts was completed or not (Step S251), and when it judges that the printing of all of the manuscripts was not completed (S251: NO), it returns the processing to Step S250 to continue the printing processing. Further, when the control portion 101 judges that the printing of all of the manuscripts was completed (S251: YES), it performs the invalidation of the image scanned, by deleting the image data which are retained in the image memory 108 (Step S252), and the printing processing is terminated.

On the other hand, when the control portion 101 judges in Step S248 that the user was not certified (S248: NO), it permits the copy of each of the manuscripts which are not in the certification requiring region, and scans said corresponding image data among the image data which were retained in the image memory 108, to transfer them to the printing portion 113 (Step S253). The printing portion 113 performs the printing processing based on the image data which are transferred from the image memory 108 (Step S254).

The control portion 101 judges whether the printing of the whole manuscripts out of the certification requiring region has been completed or not (Step S255), and when it judges that the printing of the whole manuscripts was not completed (S255: NO), it returns the processing to Step S253 to continue the printing processing. Further, when the control portion 101 judges that the printing processing of the whole manuscripts out of the certification requiring region was completed (S255: YES), it displays a message that the copy processing of a portion of the manuscripts among said manuscript bundle is not carried out, on the operating panel 103, and informs it to a user (Step S256). Further, it invalidates the images scanned, by deleting the image data which the image memory 108 retains (Step S252), and the copy processing is terminated.

### Embodiment 8

The Embodiment described above was a composition that the frontside and the backside of the manuscript are simultaneously scanned using CIS 14, but they are not always necessary to be simultaneously scanned. For example, it may be a composition that the frontside and the backside of the manuscript are reversed after scanning the frontside of the manuscript by reversing the frontside and the backside of the manuscript for scanning. In this case, mechanism of scanning the frontside of the manuscript and mechanism of scanning the backside can be used in common.

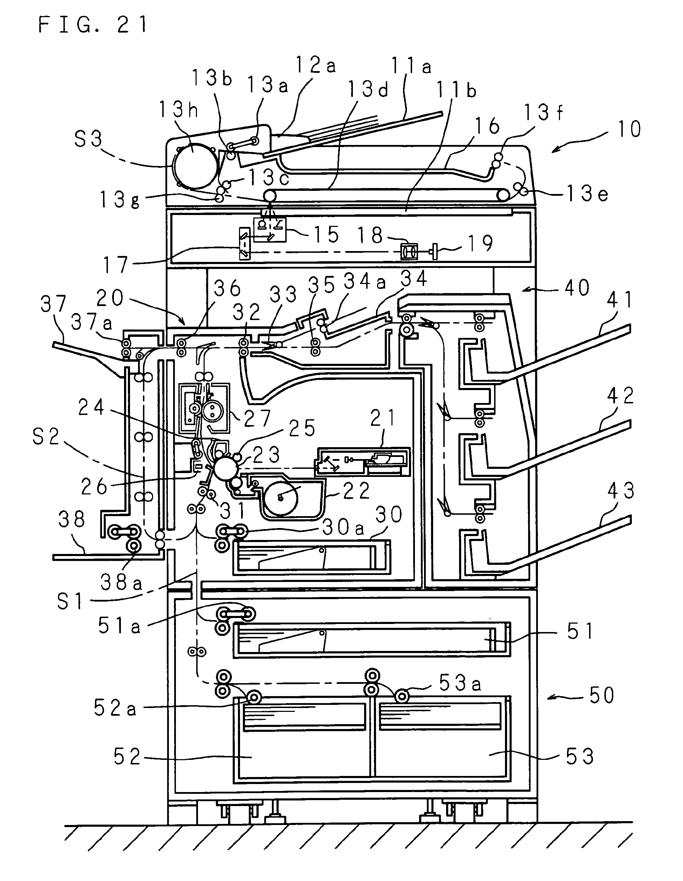

FIG. 21 is a longitudinal cross sectional view showing the variation example of the composition of a manuscript scanning portion provided on a composite machine 100. Since the manuscript scanning portion 10 provided on the uppermost stage of the composite machine 100 which is shown in FIG. 21 is not equipped with CIS 14 which is shown in FIG. 2, the frontside and the backside of the manuscript cannot be simultaneously scanned, but the frontside and the backside of the manuscript are composed so as to be respectively scanned by reversing the frontside and the backside of the manuscript for scanning. Further, in respective portions shown in FIG. 21, those which carry out the same function as the respective portions shown in FIG. 2 are imparted with the same codes to be illustrated.

The ADF 104 mounted on the manuscript scanning potion 10 is composed of the manuscript tray 11a for laminating manuscripts for scanning in face down condition, a manuscript regulating board 12a regulating the position to a width direction of the manuscripts mounted, a bring-in roller 13a for taking in the manuscripts laminated on the manuscript tray 11a one by one from the uppermost layer, conveyance rollers 13b and 13c conveying the manuscript which was taken in by the bring-in roller 13a to a manuscript stand 11b, a conveyance belt 13 conveying the manuscript on the manuscript stand 11b to a direction of the paper discharge tray 16 or to its reverse direction, and paper discharge rollers 13e and 13f discharging the manuscript to the paper discharge tray 16 after scanning the image.

The ADF 104 shown in FIG. 21 is further equipped with a conveyance roller 13g introducing the manuscript conveyed by the conveyance belt 13 from the manuscript stand 11b to a reverse direction against the direction of the paper discharge tray 16, to a conveyance path S3 and a conveyance roller 13h conveying the manuscript which was conveyed by the conveyance roller 13g, to the conveyance roller 13c as it is. Thereby, ADF 104 is composed so as to take in the manuscripts laminated on the manuscript tray 11a one by one from the uppermost layer, convey them to the manuscript stand 11b, scan images recorded on the surface of the manuscripts, then reverse the frontside and the backside of the manuscripts by the conveyance rollers 13g and 13h, convey them to the manuscript stand 11b again, and scan images recorded on the backside of the manuscripts. Further, the manuscripts whose frontside and backside were scanned are discharged to the paper discharge tray 16.

Further, the light source unit 15, the mirror unit 17, the imaging lens 18 and the CCD line sensor 19 which the manuscript scanning portion 10 provides, and the image forming portion 20, the paper discharge portion 40 and the paper feeding portion 50 which are arranged the lower side of the manuscript scanning portion 10 are the same as those shown in FIG. 2; therefore illustration is abbreviated.

In Embodiments described above, the image scanner of the present invention was illustrated as an example applied to the composite machine 100 equipped with a scanner function, a copy function and a filing function, but it can be also utilized in a facsimile device having a print function which forms an image on a sheet receiving print data transmitted from outside, an image transmission function which transmits the image data scanned from a manuscript by the image scanner to an external device and the like, or various image processing apparatuses such as a printer, and a composite machine which combined these functions, by being composed so as to be connected with external apparatuses and communication lines.

Further, in Embodiments described above, an example of a composition that the performance of copy processing is designed to be limited based on whether the specific information is added or not on the backside of a manuscript was illustrated, but for example, the performance of facsimile transmission and net work transmission through communication lines such as LAN can be also limited. Further, as described above, when the performance of copy processing is permitted, it can be composed so as to not only copy an image on the frontside of a manuscript, but also copy an image formed on the backside of a fixed manuscript. In this case, the performance of copy processing can be also limited in the copy of a confidential document, and the further reinforcement of security can be designed.

## Claims

1. An image forming apparatus (100) receiving image data and forming an image on a sheet based on the received image data, **characterized by** comprising:
memory means (114) for storing image data related to a predetermined image;
judgment means (101) for judging whether or not of the received image data has confidentiality; and
means (113) for forming an image based on the image data and the predetermined image, on one side and the other side of a sheet respectively, when it is judged that the fore-mentioned image data has confidentiality.

2. The image forming apparatus (100) according to claim 1, further comprising detection means (112) for detecting an image included in the received image data;
wherein the judgment means (101) judges whether of not the received image data has confidentiality, based on the image detected by the detection means (112).

3. The image forming apparatus (100) according to claim 1, further comprising means (103) for receiving identification information for identifying a user at reception of the image data; and
authentication means (101) for authenticating the user based on the received identification information;
wherein the judgment means (101) judges whether or not the received image data has confidentiality based on a result of authentication by the authentication means(101).

4. The image forming apparatus (100) according to any one of claim 1 to 3, wherein when an image is formed on one side of each of a plurality of sheets based on the received image data, the predetermined image is formed on the other side of a predetermined number sheet when the judgment means (101) judges that the fore-mentioned image data has confidentiality.

5. The image forming apparatus (100) according to any one of claim 1 to 4, wherein the predetermined image includes information that copying of the image formed on one side of the sheet is prohibited.

6. The image forming apparatus (100) according to any one of claim 1 to 4, wherein the predetermined image includes information related to permission/prohibition of copying of the image formed on one side of the sheet.

7. The image forming apparatus (100) according to any one of claim 1 to 4, wherein the predetermined image includes information for demanding the authentication of a user.

8. An image scanner (100) scanning an image from a document, **characterized by** comprising:
scan means (105) for obtaining image data by scanning an image formed on one side of the document;
detection means (112) for detecting a predetermined image formed on the other side of the document; and
judgment means (101) for judging whether a permission is given to the execution of processing based on the obtained image data by the scan means based on the predetermined image which said detection means (105) detects.

9. The image scanner (100) according to claim 8, wherein the scan means (105) continuously scans images formed on one side of the respective plurality of documents.

10. The image scanner (100) according to claim 8, wherein the detection means (112) detects a predetermined image in the other side of a predetermined number document among the plurality of documents.

11. The image scanner (100) according to claim 9, wherein the detection means (112) detects a predetermined image in the other side of each of the plurality of documents.

12. The image scanner (100) according to any one of claim 8 to 11, wherein the judgment means (101) judges that a permission is given to the execution of processing based on the image data obtained by the scan means (105) when the detection means detects a predetermined image.

13. The image scanner (100) according to claim 11, wherein the judgment means (101) judges that when the predetermined image is detected in an even number of documents, a permission is given to the execution of processing based on the image data which the scan means (105) obtains from one side of each of the documents between an odd number document and document in which the predetermined image is next detected among the documents in which the predetermined image is detected.

14. The image scanner (100) according to any one of claim 8 to 11, further comprising authentication means (101) for carrying out user authentication when the detection means (112) detects the predetermined image,
wherein the judgment means (101) judges that a permission is given to the execution of processing based on the image data obtained by the scan means (105), when the user is authenticated by the authentication means (101).

15. The image scanner (100) according to claim 11, further comprising authentication means (101) for carrying out user authentication when the detection means (112) detects a predetermined image in any one of documents,
wherein the judgment means (101) judges that a permission is given to the execution of processing based on the image data which the scan means (105) obtains from one side of the document in which the predetermined image is not detected and judges that a permission is given to the execution of processing based on the image data which the scan means (105) obtains from one side of the document in which the predetermined image is detected, when the user is authenticated by the authentication means (101).

16. The image scanner (100) according to claim 11, further comprising authentication means (101)for carrying out user authentication when the detection means detects a predetermined image in a plurality of documents,
wherein the judgment means (101) judges that when the detection means (112) detects a predetermined image in an even number of documents, a permission is given to the execution of processing based on the image data which the scan means (105) obtained from one side of each of the documents which are not between an odd number document to a document in which the predetermined image is next detected among the documents in which the predetermined image is detected, and judges that a permission is given to the execution of processing based on the image data which the scan means (105) obtained from one side of each of the documents between the odd number of document and a document in which the predetermined image is next detected, when the user is authenticated by the authentication means (101).

17. The image scanner (100) according to any one of claim 14 to 16, further comprising a means for interrupting the scanning of an image by the scan means (105) when the detection means (112) detects the predetermined image; and
means (101) for resuming the interrupted scanning of an image by the scan means (105), when the user is authenticated by the authentication means (101).

18. The image scanner (100) according to any one of claim 8 to 17, further comprising a means (103) for informing that the processing cannot be performed when the judgment means (101) judges that a permission is not given to the execution of processing based on the image data which the scan means (105) obtains.

19. The image scanner (100) according to any one of claim 8 to 18, further comprising a memory means (108) for storing the image data which the scan means (105) obtains; and
means for deleting the image data stored in the memory means (108) when the judgment means (101) judges that a permission is not given to the execution of processing based on the image data which the scan means (105) obtains.

20. The image scanner (100) according to any one of claim 8 to 19, further comprising other side scan means (14) for scanning an image which is formed on the other side of the document;
wherein the detection means (112) detects a predetermined image in the image which the other side scan means (105) scans.

21. The image scanner (100) according to any one of claim 8 to 20, wherein the scan means (105) is constituted so as to scan an image which is formed on the other side of the document, and the detection means (112) detects a predetermined image in the image which is formed on the other side of the document which the scan means (105) scans.

22. The image scanner (100) according to any one of claim 8 to 21, wherein the predetermined image is an image not affecting image data which the scan means (105) scans from one side of the document.
